(19) **Europäisches Patentamt**
**European Patent Office**
**Office européen des brevets**

(11) **EP 3 901 682 A1**

(12) **EUROPEAN PATENT APPLICATION**
published in accordance with Art. 153(4) EPC

(43) Date of publication:
**27.10.2021 Bulletin 2021/43**

(51) Int Cl.:
*G02B 13/00* (2006.01)  *G02B 9/62* (2006.01)
*G02B 11/32* (2006.01)

(21) Application number: **19951684.0**

(22) Date of filing: **04.11.2019**

(86) International application number:
**PCT/CN2019/115318**

(87) International publication number:
**WO 2021/087661 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Jiangxi Jingchao Optical Co., Ltd.**
**Nanchang, Jiangxi 330096 (CN)**

(72) Inventors:
• **XIE, Han**
  **Nanchang, Jiangxi 330096 (CN)**
• **LIU, Binbin**
  **Nanchang, Jiangxi 330096 (CN)**
• **LI, Ming**
  **Nanchang, Jiangxi 330096 (CN)**

(74) Representative: **Inchingalo, Simona**
  **Bugnion S.p.A.**
  **Viale Lancetti, 17**
  **20158 Milano (IT)**

(54) **OPTICAL LENS GROUP, IMAGE CAPTURING DEVICE, AND ELECTRONIC DEVICE**

(57) An optical lens group, an image capturing device, and an electronic device. The optical lens group sequentially comprises, from an object side to an image side along an optical axis, a first lens (L1), a second lens (L2), a third lens (L3), a fourth lens (L4), a fifth lens (L5), and a sixth lens (L6). The first lens (L1) has positive focal power, and an object side surface (S1) thereof is a protruding surface at the optical axis. The second lens (L2) to the fifth lens (L5) each have focal power. An object side surface (S5) of the third lens (L3) is a protruding surface at the optical axis, and an image side surface (S6) thereof, is a recessed surface at the optical axis. An object side surface (S9) of the fifth lens (L5) is a protruding surface at the optical axis, and an image side surface (S10) thereof is a recessed surface at the optical axis. The sixth lens (L6) has negative focal power. An object side surface (S11) is a protruding surface at the optical axis, and an image side surface (S12) thereof is a recessed surface at the optical axis. At least one of the object side surface (S11) and the image side surface (S12) of the sixth lens (L6) comprises at least one inflection point. The f number (FNO) of the optical lens group meets FNO ≤ 1.8. A combined focal length f123 of the first lens (L1), the second lens (L2), and the third lens (L3) and a combined focal length f456 of the fourth lens (L4), the fifth lens (L5), and the sixth lens (L6) meet -1 < f123/f456 < 0.

FIG. 1

**Description**

**TECHNICAL FIELD**

The present application relates to the field of optical imaging technologies, more particularly, to an optical lens assembly, an image capturing apparatus and an electronic apparatus.

**BACKGROUND**

In recent years, with the development of science and technology, portable electronic products with a photographing function become increasingly more popular. With the progress of a semiconductor process technology, pixel sizes of photosensitive elements such as CMOS chips are increasingly smaller. In addition, nowadays electronic products are developing towards good functionality and a slim and short appearance. Therefore, a miniaturized lens with good imaging quality has currently become the mainstream on the market.

In order to ensure the imaging quality, a conventional optical lens is usually larger in size and longer in total length, so it is difficult to carry such an optical lens on an ultra-thin electronic product. In addition, the conventional optical lens has weak adaptability to dark-light scenes, and a resulting photographed picture is dark, which cannot meet users' professional photographing needs.

**SUMMARY**

According to various embodiments of the present application, an optical lens assembly is provided.

An optical lens assembly includes a first lens, a second lens, a third lens, a fourth lens, a fifth lens and a sixth lens. The six lenses are arranged in sequence from an object side to an image side along an optical axis.

The first lens has positive focal power, and an object-side surface of the first lens is convex at the optical axis.

The second lens has focal power.

The third lens has focal power, and the third lens has an object-side surface being convex at the optical axis and an image-side surface being concave at the optical axis.

The fourth lens has focal power.

The fifth lens has focal power, and the fifth lens has an object-side surface being convex at the optical axis and an image-side surface being concave at the optical axis.

The sixth lens has negative focal power, and the sixth lens has an object-side surface being convex at the optical axis and an image-side surface being concave at the optical axis. At least one of the object-side surface and the image-side surface of the sixth lens includes at least one inflection point.

The optical lens assembly satisfies the following relations:

$$FNO \leq 1.8; \text{ and}$$
$$-1 < f123/f456 < 0;$$

where FNO is an f-number of the optical lens assembly, f123 is a combined focal length of the first lens, the second lens and the third lens, and f456 is a combined focal length of the fourth lens, the fifth lens and the sixth lens.

An image capturing apparatus includes the optical lens assembly according to the above embodiment; and a photosensitive element. The photosensitive element is arranged on the image side of the optical lens assembly.

An electronic apparatus includes: a housing; and the image capturing apparatus according to the above embodiment. The image capturing apparatus is mounted to the housing.

Details of one or more embodiments of the present application are set forth in the following accompanying drawings and descriptions. Other features, objectives and advantages of the present application become obvious with reference to the specification, the accompanying drawings, and the claims.

**BRIEF DESCRIPTION OF THE DRAWINGS**

In order to better describe and illustrate embodiments or examples of those inventions disclosed herein, reference may be made to one or more accompanying drawings. Additional details or examples used to describe the accompanying drawings should not be considered as limitations on the scope of any of the disclosed inventions, the presently described embodiments or examples, and the presently understood best mode of these inventions.

Figure 1 is a schematic structural diagram of an optical lens assembly according to Embodiment 1 of the present application;

Figure 2A to Figure 2D are longitudinal spherical aberration curves, astigmatic field curves and distortion curves of the optical lens assembly according to Embodiment 1 and chief ray angle curves on an imaging surface respectively;

Figure 3 is a schematic structural diagram of an optical lens assembly according to Embodiment 2 of the present application;

Figure 4A to Figure 4D are longitudinal spherical aberration curves, astigmatic field curves and distortion curves of the optical lens assembly according to Embodiment 2 and chief ray angle curves on an imaging surface respectively;

Figure 5 is a schematic structural diagram of an optical lens assembly according to Embodiment 3 of the present application;

Figure 6A to Figure 6D are longitudinal spherical aberration curves, astigmatic field curves and distortion curves of the optical lens assembly according to Embodiment 3 and chief ray angle curves on an imaging surface respectively;

Figure 7 is a schematic structural diagram of an optical lens assembly according to Embodiment 4 of the present application;

Figure 8A to Figure 8D are longitudinal spherical aberration curves, astigmatic field curves and distortion curves of the optical lens assembly according to Embodiment 4 and chief ray incident angle curves on an imaging surface respectively;

Figure 9 is a schematic structural diagram of an optical lens assembly according to Embodiment 5 of the present application;

Figure 10A to Figure 10D are longitudinal spherical aberration curves, astigmatic field curves and distortion curves of the optical lens assembly according to Embodiment 5 and chief ray angle curves on an imaging surface respectively;

Figure 11 is a schematic structural diagram of an optical lens assembly according to Embodiment 6 of the present application;

Figure 12A to Figure 12D are longitudinal spherical aberration curves, astigmatic field curves and distortion curves of the optical lens assembly according to Embodiment 6 and chief ray angle curves on an imaging surface respectively;

Figure 13 is a schematic structural diagram of an optical lens assembly according to Embodiment 7 of the present application; and

Figure 14A to Figure 14D are longitudinal spherical aberration curves, astigmatic field curves and distortion curves of the optical lens assembly according to Embodiment 7 and chief ray angle curves on an imaging surface respectively.

## DETAILED DESCRIPTION OF THE EMBODIMENTS

In order to make the objectives, technical solutions and advantages of the present application clearer, the present application is described in further detail below with reference to the accompanying drawings and embodiments. It should be understood that particular embodiments described herein are intended only to interpret the present application and not intended to limit the present application.

It should be noted that when one element is referred to as "arranged on" another element, it may be directly on the other element or an intermediate element may exist. When one element is considered to be "connected to" another element, it may be directly connected to the other element or an intermediate element may co-exist. The terms "vertical", "horizontal", "left", "right" and similar expressions used herein are for illustrative purposes only and do not indicate a unique implementation.

It should be noted that in the specification, expressions such as first, second and third are used only to distinguish one feature from another feature, and do not imply any limitation on features. Therefore, a first lens discussed below may also be referred to as a second lens or third lens without departing from the teaching of the present application.

For ease of description, spherical or aspheric shapes shown in the accompanying drawings are illustrated with examples. That is, spherical or aspheric shapes are not limited to the spherical or aspheric shapes shown in the accompanying drawings. The accompanying drawings are merely examples, not strictly drawn to scale.

Unless defined otherwise, all technical and scientific terms used herein have the same meanings as are commonly understood by those skilled in the art. The terms used herein in the specification of the present application are for the purpose of describing specific embodiments only but not intended to limit the present application. The term "and/or" used herein includes any and all combinations of one or more related listed items.

A conventional six-piece optical lens assembly is generally longer in total length while ensuring the imaging quality, so a lens equipped with the lens assembly cannot be carried to an ultra-thin electronic product. In addition, the conventional six-piece optical lens assembly often has a smaller aperture and weaker dark-light photographing capability, which makes it difficult to capture brighter images.

The defects in the above solutions are results obtained by the inventor after practice and careful study. Therefore, the discovery process of the above problems and the solutions to the above problems proposed below in embodiments of the present application all should be contributions of the inventor to the present application.

Features, principles and other aspects of the present application are described in detail below.

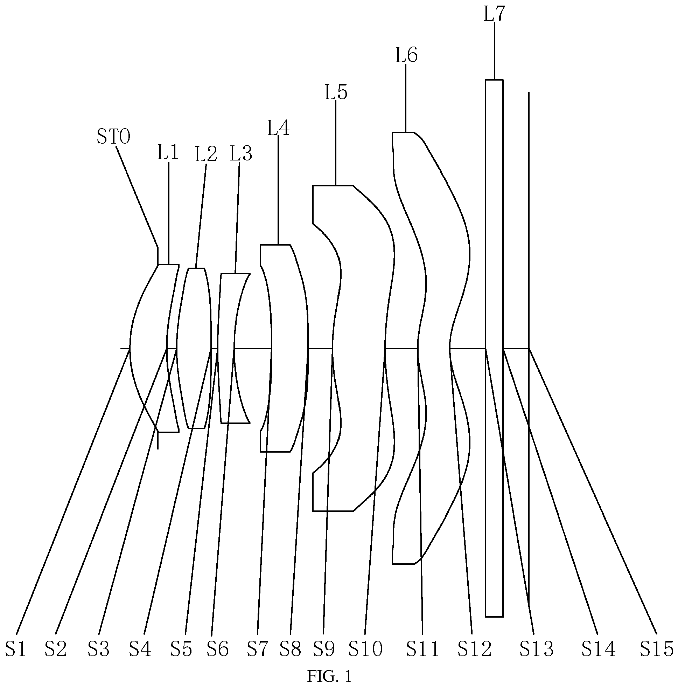

Referring to Figure 1, Figure 3, Figure 5, Figure 7, Figure 9, Figure 11 and Figure 13 together, embodiments of the present application provide an optical lens assembly configured with a large aperture and good imaging quality and capable of meeting application requirements of miniaturization and ultra-thinness. The optical lens assembly includes six lenses with focal power, that is, a first lens, a second lens, a third lens, a fourth lens, a fifth lens and a sixth lens, and an imaging surface located on an image side of the sixth lens. The six lenses are arranged in sequence from an object side to an image side along an optical axis.

The first lens has positive focal power and mainly plays a role of focusing light, and an object-side surface of the first lens is convex at the optical axis, which is conducive to adjusting a shape and the magnitude of the focal power of the first lens, so as to balance curvature configuration of two surfaces of the first lens.

The second lens has focal power. When the second lens has positive focal power, it can cooperate with the first lens to further reduce the total length of the lens; when the second lens has negative focal power, it can correct part of the aberration generated by the first lens, so that the system has higher resolution.

The third lens has focal power, and the third lens has an object-side surface being convex at the optical axis and an image-side surface being concave at the optical axis, which is conducive to correcting the aberration generated by the first and second lenses, thereby improving the imaging quality.

The fourth lens has focal power, and the fourth lens has an image-side surface convex in an off-axis region, which is conducive to reducing the distortion of an off-axis field of view, avoiding imaging distortion and correcting aberration.

The fifth lens has focal power, and the fifth lens has an object-side surface being convex at the optical axis and an image-side surface being concave at the optical axis, which is conducive to further correcting the aberration. At the same time, the image-side surface of the fifth lens is convex in the off-axis region, which is conducive to cooperating with the sixth lens to reduce a chief ray angle of the off-axis field of view, thereby improving a degree of matching with the conventional photosensitive element.

The sixth lens may have negative focal power, so that a rear focal length of the lens assembly can be reduced and it is conducive to arranging a lens equipped with the optical lens assembly of the present application in an ultra-thin electronic device. At the same time, an object-side surface of the sixth lens is convex at the optical axis, which is conducive to controlling a shape and the magnitude of the focal power of the sixth lens, to further correct the aberration. An image-side surface of the sixth lens is concave at the optical axis, so that a suitable rear focal length can be configured for the optical lens assembly to realize miniaturization of the lens. At least one of the object-side surface and the image-side surface of the sixth lens includes at least one inflection point, so as to effectively reduce an angle at which light from the off-axis field of view is incident to the photosensitive element to make it more accurately matched with the photosensitive element, thereby improving the light energy receiving efficiency of the photosensitive element.

Specifically, the optical lens assembly satisfies the following relation: FNO≤1.8; where FNO is an f-number of the optical lens assembly. FNO may be 1.4, 1.5, 1.6, 1.7 or 1.8. The f-number of the optical lens assembly is controlled to satisfy the above relation, so that, in a case where the miniaturization of the optical lens assembly is ensured, the optical lens assembly has a larger entrance pupil diameter to increase the amount of incoming light to obtain clearer and brighter images, which meets the photographing needs of dark-light scenes such as night scenes and starry sky. In addition, a smaller FNO further indicates that the optical lens assembly has a better blurring effect, which can bring better visual experience to the users.

Specifically, the optical lens assembly satisfies the following relation: -1<f123/f456<0; where f123 is a combined focal length of the first lens, the second lens and the third lens, and f456 is a combined focal length of the fourth lens, the fifth lens and the sixth lens. f123/f456 may be -0.95, -0.65, -0.35, -0.25, -0.20, -0.15, -0.10 or -0.05. Under a condition that the above relation is satisfied, the first, second and third lenses can provide enough positive focal power to better focus the light, and at the same time, the fourth, fifth and sixth lenses can provide suitable negative focal power to correct the spherical aberration generated by the first lens, the second lens and the third lens, reduce the field curvature and distortion of the optical lens assembly, and improve the analytical capability of the optical lens assembly.

When the optical lens assembly is applied to imaging, light emitted from or reflected by a subject enters the optical lens assembly from an object-side direction, sequentially passes through the first lens, the second lens, the third lens, the fourth lens, the fifth lens and the sixth lens, and is finally focused on the imaging surface.

The focal power, surface types and effective focal lengths of the lenses of the optical lens assembly are reasonably allocated, so that an aperture of the optical lens assembly can be effectively increased while the imaging quality of the optical lens assembly is ensured, so as to improve the dark-light photographing capability of the optical lens assembly and enhance the imaging quality.

In an exemplary implementation, the object-side surface and the image-side surface of the sixth lens are both aspheric. By setting the object-side surface and the image-side surface of the sixth lens to be aspheric, the aberration can be effectively corrected and the imaging resolution of the optical lens assembly can be improved.

In an exemplary implementation, the optical lens assembly satisfies the following relation: TTL/ImgH≤1.7; where TTL is a distance on the optical axis from the object-side surface of the first lens to an imaging surface of the optical lens assembly, and ImgH is half of a diagonal length of an effective pixel region on the imaging surface of the optical lens assembly. TTL/ImgH may be 1.378, 1.428, 1.458, 1.488, 1.518, 1.548, 1.578 or 1.608. Under a condition that the above relation is satisfied, the total length of the optical lens assembly can be effectively reduced, to realize miniaturization and ultra-thinness of the lenses.

In an exemplary implementation, the optical lens assembly satisfies the following relation: EPD/TTL>0.45; where EPD is an entrance pupil diameter of the optical lens assembly, and TTL is a distance on the optical axis from the object-side surface of the first lens to an imaging surface of the optical lens assembly. EPD/TTL may be 0.451, 0.455, 0.459, 0.464, 0.484, 0.504, 0.524, 0.544, 0.564 or 0.584. Under a condition that the above relation is satisfied, the total length of the optical lens assembly can be effectively reduced while the optical lens assembly has a larger clear aperture, so as to realize miniaturization and ultra-thinness of the lenses.

In an exemplary implementation, the optical lens assembly satisfies the following relation: 0.3<R5/R6<3.5; where R5 is a curvature radius of the object-side surface of the third lens at the optical axis, and R6 is a curvature radius of the image-side surface of the third lens at the optical axis. R5/R6 may be 0.328, 0.348, 0.368, 0.768, 1.168, 1.568, 2.068, 2.568, 3.068 or 3.368. Under a condition that the above relation is satisfied, the third lens can be designed as a meniscus lens with a convex surface towards the object side, so that the spherical aberration and astigmatism of the optical lens assembly can be compensated well, thereby guaranteeing the imaging quality.

In an exemplary implementation, the optical lens assembly satisfies the following relation: 1<R9/f+R10/f<2; where R9 is a curvature radius of the object-side surface of the fifth lens at the optical axis, R10 is a curvature radius of the image-side surface of the fifth lens at the optical axis, and f is an effective focal length of the optical lens assembly. (R9/f+R10/f) may be 1.437, 1.487, 1.537, 1.587, 1.637, 1.687, 1.737, 1.787, 1.837, 1.887, 1.937, 1.987 or 1.996. Under a condition that the above relation is satisfied, a shape of the fifth lens can be reasonably optimized to further correct the aberration and field curvature of the optical lens assembly and improve the imaging quality.

In an exemplary implementation, the optical lens assembly satisfies the following relation: MAX(cra)≤38.5°; where MAX(cra) is a maximum chief ray angle on the imaging surface of the optical lens assembly. MAX(cra) may be 31.5°, 32.5°, 33.5°, 34.5°, 35.5°, 36.5°, 37.5° or 38.5°. Under a condition that the above relation is satisfied, an increase in the chief ray angle in the off-axis field of view can be effectively inhibited, so that the chief ray can be more accurately matched with an ultra-high-pixel photosensitive element, so as to improve the light energy receiving efficiency of the photosensitive element.

In an exemplary implementation, the optical lens assembly satisfies the following relation: f1/OAL>0.7; where f1 is an effective focal length of the first lens, and OAL is a distance on the optical axis from the object-side surface of the first lens to the image-side surface of the sixth lens. f1/OAL may be 0.743, 0.943, 1.143, 1.343, 1.543, 1.743, 1.943 or 2.143. Under a condition that the above relation is satisfied, the first lens can have enough positive focal power, so as to easily compress the total length of the optical lens assembly and realize the miniaturization of the lens. If the ratio of the two is less than or equal to 0.7, the focal power of the first lens may be reduced or the total length of the optical lens assembly may be compressed insufficiently, which is not conducive to the miniaturization of the lens.

In an exemplary implementation, the optical lens assembly satisfies the following relation: 0.3<T34/P<0.5; where T34 is a distance from the image-side surface of the third lens to an object-side surface of the fourth lens, and P is a distance on the optical axis from the object-side surface of the third lens to an image-side surface of the fourth lens. T34/P may be 0.333, 0.343, 0.353, 0.363, 0.373, 0.383, 0.393, 0.403, 0.413, 0.423 or 0.433. Under a condition that the above relation is satisfied, an air gap between the third lens and the fourth lens can be optimized, to provide sufficient space for surface type adjustment of the image-side surface of the third lens and the object-side surface of the fourth lens. At the same time, if the ratio of the two is less than or equal to 0.3, the third lens and the fourth lens may be too compact, which is not conducive to the flexible adjustment of their surface types. If the ratio of the two is greater than or equal to 0.5, the third lens and the fourth lens may be too dispersed, which is not conducive to the miniaturization and ultra-thinness of the lenses.

In an exemplary implementation, the optical lens assembly satisfies the following relation:

MIN(T56)/MAX(T56)<0.54; where MIN(T56) is a minimum distance from the image-side surface of the fifth lens to the object-side surface of the sixth lens in a direction parallel to the optical axis, and MAX(T56) is a maximum distance from the image-side surface of the fifth lens to the object-side surface of the sixth lens in the direction parallel to the optical axis. MIN(T56)/MAX(T56) may be 0.063, 0.093, 0.153, 0.253, 0.303, 0.353, 0.403, 0.453, 0.503 or 0.534. Under a condition that the above relation is satisfied, concavities and convexities of the fifth lens and the sixth lens can be in the same direction, and the configuration is more compact, which is more conducive to the miniaturization of the optical lens assembly.

In an exemplary implementation, the optical lens assembly satisfies the following relation:

|f1/CT1|+|f2/CT2|+|f3/CT3|+|f4/CT4|+|f5/CT5|+|f6/CT6|>141; where f1, f2, f3, f4, f5 and f6 are effective focal lengths of the first lens, the second lens, the third lens, the fourth lens, the fifth lens and the sixth lens respectively, and CT1, CT2, CT3, CT4, CT5 and CT6 are thicknesses of the first lens, the second lens, the third lens, the fourth lens, the fifth lens and the sixth lens on the optical axis respectively. The effective focal lengths of the lenses and the thicknesses of the lenses on the optical axis are controlled to satisfy the above relation, so that the magnitude of the focal power and central thicknesses of the lenses can be reasonably optimized, so as to effectively reduce the total length of the optical lens assembly while the imaging quality of the optical lens assembly is ensured, thereby realizing the miniaturization of the lenses.

In an exemplary implementation, the optical lens assembly is further provided with an aperture diaphragm. The aperture diaphragm may be arranged between the object side of the optical lens assembly and the first lens or between the first lens and the sixth lens. Preferably, the aperture diaphragm is located between the object side of the optical lens assembly and the first lens to effectively prevent an excessive increase in the chief ray angle, so that the optical lens assembly is better matched with the photosensitive element of the conventional specification.

In some other embodiments, the aperture diaphragm may also be located on a surface (e.g., the object-side surface or the image-side surface) of any one of the first lens to the sixth lens, to form an operating relationship with the lens. For example, the aperture diaphragm is formed on the surface of the lens by coating the surface with a photoresist coating; or the surface of the lens is clamped by a gripper, and the structure of the gripper located on the surface can limit a width of an imaging beam of an on-axis object point, thereby forming the aperture diaphragm on the surface.

In an exemplary implementation, lens surfaces of each lens in the first lens to the sixth lens are both aspheric, so that the flexibility of lens design can be improved and the aberration can be corrected effectively, so as to improve the imaging resolution of the optical lens assembly. In some other embodiments, both the object-side surface and the image-side surface of each lens in the optical lens assembly may also be spherical. It should be noted that the above embodiments are only examples of some embodiments of the present application. In some embodiments, the surfaces of each lens in the optical lens assembly may be any combination of an aspheric surface and a spherical surface.

In an exemplary implementation, the lenses in the optical lens assembly may be all made of glass or all made of plastic. The lens made of plastic can reduce the weight of the optical lens assembly and reduce manufacturing costs, while the lens made of glass can provide the optical lens assembly with excellent optical properties and good temperature-resistance characteristics. It should be noted that the lenses in the optical lens assembly may also be made of any combination of glass and plastic, and may not be necessarily all made of glass or all made of plastic.

In an exemplary implementation, the optical lens assembly further includes a filter configured to filter out infrared light and/or protection glass configured to protect a photosensitive element, wherein the photosensitive element is located on an imaging surface of the optical lens assembly. Further, the imaging surface may be a photosensitive surface of the photosensitive element.

The optical lens assembly according to the above implementation of the present application may include a plurality of lenses, for example, six lenses described above. The focal lengths, focal power, surface types and thicknesses of the lenses and on-axis pitches among the lenses are reasonably allocated, which can ensure that the optical lens assembly has a small total length and a large aperture (FNO may be 1.4), and at the same time has better imaging quality, so as to better meet the requirements of adaptation to slim electronic devices, such as mobile phones and tablet computers, and dark-light photographing needs. It may be understood that the optical lens assembly is not limited to including six lenses, although an example of six lenses is described in the implementation. The optical lens assembly may also include other numbers of lenses if necessary.

Specific embodiments of the optical lens assembly applicable to the above implementation are further described below with reference to the accompanying drawings.

Embodiment 1

An optical lens assembly according to Embodiment 1 of the present application is described below with reference to Figure 1 to Figure 2D.

Figure 1 is a schematic structural diagram of an optical lens assembly according to Embodiment 1. As shown in Figure 1, the optical lens assembly includes a first lens L1, a second lens L2, a third lens L3, a fourth lens L4, a fifth lens L5, a sixth lens L6 and an imaging surface S15 in sequence from an object side to an image side along an optical axis.

The first lens L1 has positive focal power, with an object-side surface S1 being convex at the optical axis and convex at the circumference and an image-side surface S2 being concave at the optical axis and concave at the circumference.

The second lens L2 has positive focal power, with an object-side surface S3 being convex at the optical axis and convex at the circumference and an image-side surface S4 being convex at the optical axis and convex at the circumference.

The third lens L3 has negative focal power, with an object-side surface S5 being convex at the optical axis and convex at the circumference and an image-side surface S6 being concave at the optical axis and concave at the circumference.

The fourth lens L4 has negative focal power, with an object-side surface S7 being concave at the optical axis and concave at the circumference and an image-side surface S8 being convex at the optical axis and convex at the circumference.

The fifth lens L5 has positive focal power, with an object-side surface S9 being convex at the optical axis and concave at the circumference and an image-side surface S10 being concave at the optical axis and convex at the circumference.

The sixth lens L6 has negative focal power, with an object-side surface S11 being convex at the optical axis and concave at the circumference and an image-side surface S12 being concave at the optical axis and convex at the circumference.

The object-side surface and the image-side surface of each of the first lens L1 to the sixth lens L6 are both aspheric. The design of aspheric surfaces can solve the problem of distortion of the field of view, and enable the lens to achieve an excellent optical imaging effect in the case of being smaller, thinner and flatter, so as to make the optical lens assembly have miniaturization characteristics.

The first lens L1 to the sixth lens L6 are all made of plastic. The lens made of plastic can reduce the weight of the optical lens assembly and can further reduce manufacturing costs.

A diaphragm STO is further arranged between an object OBJ and the first lens L1, to further improve the imaging quality of the optical lens assembly.

The optical lens assembly further includes a filter L7 having an object-side surface S13 and an image-side surface S14. Light from the object OBJ sequentially passes through the surfaces S1 to S14 and is finally imaged on the imaging surface S15. Further, the filter L7 is an infrared filter, configured to filter out infrared light in external light incident into the optical lens assembly to avoid imaging distortion. Specifically, the infrared filter L7 is made of glass. The infrared filter L7 may be part of the optical lens assembly and be assembled with each lens, or may be assembled in conjunction with assembly of the optical lens assembly and the photosensitive element.

Table 1 shows surface types, curvature radii, thicknesses, materials, refractive indexes, Abbe numbers (i.e., dispersion coefficients) and effective focal lengths of the lenses of the optical lens assembly according to Embodiment 1. The curvature radii, the thicknesses and the effective focal lengths of the lenses are all in millimeters (mm). In addition, taking the first lens L1 as an example, in the parameter column "Thickness" of the first lens L1, the first value is a thickness of the lens on the optical axis, and the second value is a distance on the optical axis from the image-side surface of the lens to the object-side surface of the following lens in an image-side direction. A reference wavelength in Table 1 is 555 nm.

Table 1

| Embodiment 1 | | | | | | | | |
|---|---|---|---|---|---|---|---|---|
| f=4.01 mm, FNO=1.8, FOV=78.65°, TTL=4.834 mm | | | | | | | | |
| Surface number | Surface name | Surface type | Curvature radius | Thickness | Material | Refractive index | Abbe number | Focal length |
| OBJ | Object surface | Spherical | Infinity | 1000 | | | | |
| STO | Diaphragm | Spherical | Infinity | -0.340 | | | | |
| S1 | First lens | Aspheric | 1.695 | 0.446 | Plastic | 1.544 | 56.114 | 7.372 |
| S2 | | Aspheric | 2.656 | 0.122 | | | | |
| S3 | Second lens | Aspheric | 2.965 | 0.417 | Plastic | 1.544 | 56.114 | 4.774 |
| S4 | | Aspheric | -20.474 | 0.080 | | | | |
| S5 | Third lens | Aspheric | 8.727 | 0.200 | Plastic | 1.660 | 20.370 | -7.072 |
| S6 | | Aspheric | 3.034 | 0.453 | | | | |
| S7 | Fourth lens | Aspheric | -13.282 | 0.441 | Plastic | 1.640 | 23.530 | -28.736 |
| S8 | | Aspheric | -47.555 | 0.296 | | | | |
| S9 | Fifth lens | Aspheric | 2.655 | 0.634 | Plastic | 1.544 | 56.114 | 13.662 |
| S10 | | Aspheric | 3.776 | 0.396 | | | | |
| S11 | Sixth lens | Aspheric | 1.471 | 0.387 | Plastic | 1.544 | 56.114 | -10.860 |
| S12 | | Aspheric | 1.069 | 0.435 | | | | |

(continued)

| Embodiment 1 | | | | | | | |
|---|---|---|---|---|---|---|---|
| f=4.01 mm, FNO=1.8, FOV=78.65°, TTL=4.834 mm | | | | | | | |
| Surface number | Surface name | Surface type | Curvature radius | Thickness | Material | Refractive index | Abbe number | Focal length |
| S13 | Infrared filter | Spherical | Infinity | 0.210 | Glass | 1.517 | 64.167 | |
| S14 | | Spherical | Infinity | 0.379 | | | | |
| S15 | Imaging surface | Spherical | Infinity | -0.062 | | | | |

The aspheric surface types in each lens are defined by the following formula:

$$x = \frac{ch^2}{1+\sqrt{1-(k+1)c^2h^2}} + \Sigma Aih^i \qquad (1)$$

where $x$ is a vector height of a distance from a vertex of an aspheric surface when the aspheric surface is at a position of a height h along the optical axis; c is paraxial curvature of the aspheric surface, c=1/R (i.e., the paraxial curvature c is the reciprocal of the curvature radius R in Table 1); k is a conic coefficient; and Ai is an aspheric coefficient of the $i^{th}$ order. Table 2 below gives higher-order-term coefficients A4, A6, A8, A10, A12, A14, A16, A18 and A20 applicable to the aspheric surfaces S1 to S12 of the lenses in Embodiment 1.

Table 2

| Embodiment 1 | | | | | | |
|---|---|---|---|---|---|---|
| Aspheric coefficient | | | | | | |
| Surface number | S1 | S2 | S3 | S4 | S5 | S6 |
| K | -8.0262E+00 | -1.1700E+01 | -4.2884E+00 | 9.6924E+01 | 5.9955E+01 | -7.0803E+00 |
| A4 | 1.8602E-01 | 2.6992E-02 | -2.5692E-02 | 1.4302E-02 | 1.8851E-02 | 5.1447E-02 |
| A6 | -2.0601E-01 | -1.0498E-01 | -3.5834E-02 | -1.8234E-01 | -2.3688E-01 | -1.1603E-01 |
| A8 | 2.0960E-01 | 5.8152E-02 | -8.6343E-02 | 2.8081E-01 | 5.2623E-01 | 3.5917E-01 |
| A10 | -1.7242E-01 | 2.3034E-03 | 2.5807E-01 | -2.2238E-01 | -6.7667E-01 | -6.2012E-01 |
| A12 | 7.7741E-02 | 0.0000E+00 | -1.9689E-01 | 6.7133E-02 | 4.4108E-01 | 6.5594E-01 |
| A14 | -1.4489E-02 | 0.0000E+00 | 5.4835E-02 | 2.3762E-03 | -1.0964E-01 | -3.9514E-01 |
| A16 | 0.0000E+00 | 0.0000E+00 | 0.0000E+00 | 0.0000E+00 | 0.0000E+00 | 1.1499E-01 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |
| Surface number | S7 | S8 | S9 | S10 | S11 | S12 |
| K | -9.9000E+01 | 9.9000E+01 | -1.7703E+01 | -6.2767E+01 | -1.7510E+00 | -3.1136E+00 |
| A4 | -6.9939E-02 | -1.1710E-01 | 3.3480E-02 | 6.3980E-02 | -3.6014E-01 | -2.0218E-01 |
| A6 | 1.3773E-02 | 1.4326E-02 | -1.1979E-01 | -6.8396E-02 | 1.9220E-01 | 1.1139E-01 |
| A8 | -1.6206E-02 | 6.5207E-02 | 8.6098E-02 | 2.5897E-02 | -6.3990E-02 | -4.3612E-02 |
| A10 | 9.7502E-02 | -9.2315E-02 | -4.8980E-02 | -6.0364E-03 | 1.3707E-02 | 1.0768E-02 |
| A12 | -1.9298E-01 | 7.1319E-02 | 1.7867E-02 | 7.2985E-04 | -1.7938E-03 | -1.5546E-03 |
| A14 | 1.6549E-01 | -2.6885E-02 | -3.4243E-03 | -2.7647E-05 | 1.3049E-04 | 1.1963E-04 |

(continued)

| Surface number | S7 | S8 | S9 | S10 | S11 | S12 |
|---|---|---|---|---|---|---|
| A16 | -5.6187E-02 | 3.5960E-03 | 2.6068E-04 | -7.4829E-07 | -4.0613E-06 | -3.7880E-06 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |

In this embodiment, half of a diagonal length of an effective pixel region on the imaging surface S15 of the optical lens assembly, i.e., ImgH, is 3.4 mm. Therefore, it can be known from the data in Table 1 and Table 2 that the optical lens assembly in Embodiment 1 satisfies:

FNO=1.8, where FNO is an f-number of the optical lens assembly;

f123/f456=-0.198, where f123 is a combined focal length of the first lens L1, the second lens L2 and the third lens L3, and f456 is a combined focal length of the fourth lens L4, the fifth lens L5 and the sixth lens L6;

TTL/ImgH=1.422, where TTL is a distance on the optical axis from the object-side surface S1 of the first lens L1 to the imaging surface S15 of the optical lens assembly, and ImgH is half of a diagonal length of an effective pixel region on the imaging surface S15 of the optical lens assembly;

EPD/TTL=0.461, where EPD is an entrance pupil diameter of the optical lens assembly, and TTL is a distance on the optical axis from the object-side surface S1 of the first lens L1 to the imaging surface S15 of the optical lens assembly;

R5/R6=2.876, where R5 is a curvature radius of the object-side surface S5 of the third lens L3 at the optical axis, and R6 is a curvature radius of the image-side surface S6 of the third lens L3 at the optical axis;

R9/f+R10/f=1.604, where R9 is a curvature radius of the object-side surface S9 of the fifth lens L5 at the optical axis, R10 is a curvature radius of the image-side surface S10 of the fifth lens L5 at the optical axis, and f is an effective focal length of the optical lens assembly;

MAX(cra)=34.3°, where MAX(cra) is a maximum chief ray angle on the imaging surface of the optical lens assembly;

f1/OAL=1.904, where f1 is an effective focal length of the first lens L1, and OAL is a distance on the optical axis from the object-side surface S1 of the first lens L1 to the image-side surface S12 of the sixth lens L6;

T34/P=0.414, where T34 is a distance from the image-side surface S6 of the third lens L3 to the object-side surface S7 of the fourth lens L4, and P is a distance on the optical axis from the object-side surface S5 of the third lens L3 to the image-side surface S8 of the fourth lens L4;

MIN(T56)/MAX(T56)=0.534, where MIN(T56) is a minimum distance from the image-side surface S10 of the fifth lens L5 to the object-side surface S11 of the sixth lens L6 in a direction parallel to the optical axis, and MAX(T56) is a maximum distance from the image-side surface S10 of the fifth lens L5 to the object-side surface S11 of the sixth lens L6 in the direction parallel to the optical axis;

|f1/CT1|+|f2/CT2|+|f3/CT3|+|f4/CT4|+|f5/CT5|+|f6/CT6|=178.109, where f1, f2, f3, f4, f5 and f6 are effective focal lengths of the first lens L1, the second lens L2, the third lens L3, the fourth lens L4, the fifth lens L5 and the sixth lens L6 respectively, and CT1, CT2, CT3, CT4, CT5 and CT6 are thicknesses of the first lens L1, the second lens L2, the third lens L3, the fourth lens L4, the fifth lens L5 and the sixth lens L6 on the optical axis respectively.

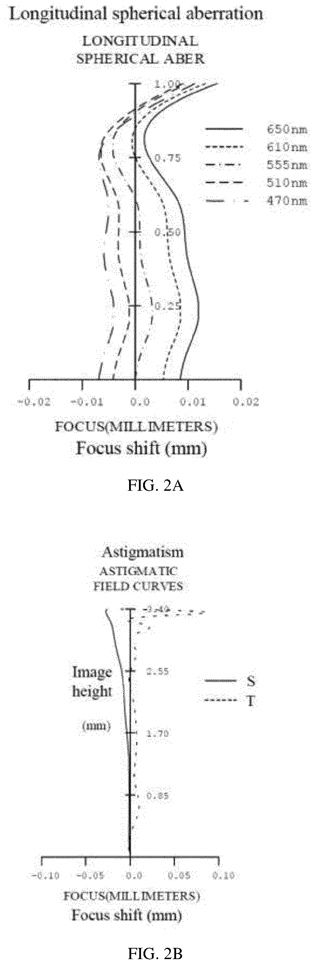

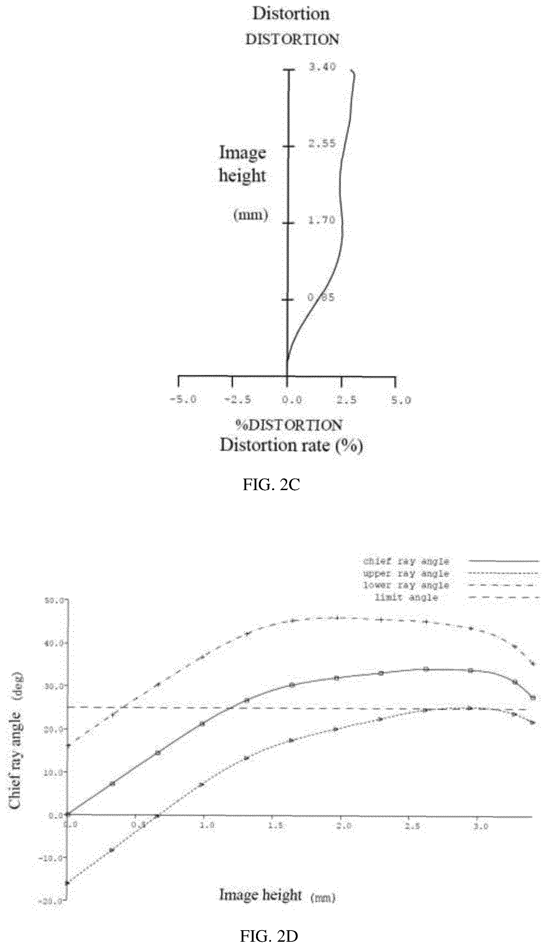

Figure 2A shows longitudinal spherical aberration curves of the optical lens assembly according to Embodiment 1, which respectively indicate focus shift of light with wavelengths of 470 nm, 510 nm, 555 nm, 610 nm and 650 nm after convergence through the optical lens assembly. Figure 2B shows astigmatic field curves of the optical lens assembly according to Embodiment 1, which indicate curvature of a tangential image surface and curvature of a sagittal image surface. Figure 2C shows distortion curves of the optical lens assembly according to Embodiment 1, which indicate distortion rates at different image heights. Figure 2D shows chief ray angle curves on the imaging surface S15 of the optical lens assembly according to Embodiment 1, which indicates angles at which a chief ray is incident to a photosensitive element at different image heights. It may be known from Figure 2A to Figure 2D that the optical lens assembly according to Embodiment 1 can achieve good imaging quality.

Embodiment 2

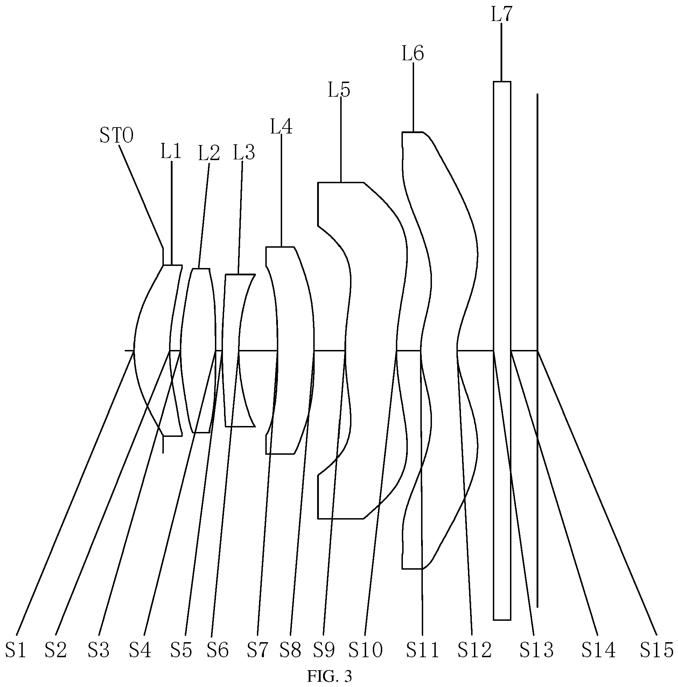

An optical lens assembly according to Embodiment 2 of the present application is described below with reference to Figure 3 to Figure 4D. In this embodiment, for brevity, the description similar to that of Embodiment 1 will be omitted. Figure 3 is a schematic structural diagram of an optical lens assembly according to Embodiment 2 of the present application.

As shown in Figure 3, the optical lens assembly includes a first lens L1, a second lens L2, a third lens L3, a fourth lens L4, a fifth lens L5, a sixth lens L6 and an imaging surface S15 in sequence from an object side to an image side along an optical axis.

The first lens L1 has positive focal power, with an object-side surface S1 being convex at the optical axis and convex at the circumference and an image-side surface S2 being concave at the optical axis and concave at the circumference.

The second lens L2 has positive focal power, with an object-side surface S3 being convex at the optical axis and convex at the circumference and an image-side surface S4 being convex at the optical axis and convex at the circumference.

The third lens L3 has negative focal power, with an object-side surface S5 being convex at the optical axis and convex at the circumference and an image-side surface S6 being concave at the optical axis and concave at the circumference.

The fourth lens L4 has positive focal power, with an object-side surface S7 being concave at the optical axis and concave at the circumference and an image-side surface S8 being convex at the optical axis and convex at the circumference.

The fifth lens L5 has negative focal power, with an object-side surface S9 being convex at the optical axis and concave at the circumference and an image-side surface S10 being concave at the optical axis and convex at the circumference.

The sixth lens L6 has negative focal power, with an object-side surface S11 being convex at the optical axis and concave at the circumference and an image-side surface S12 being concave at the optical axis and convex at the circumference.

The object-side surface and the image-side surface of each of the first lens L1 to the sixth lens L6 are both aspheric. The design of aspheric surfaces can solve the problem of distortion of the field of view, and enable the lens to achieve an excellent optical imaging effect in the case of being smaller, thinner and flatter, so as to make the optical lens assembly have miniaturization characteristics.

The first lens L1 to the sixth lens L6 are all made of plastic. The lens made of plastic can reduce the weight of the optical lens assembly and can further reduce manufacturing costs.

A diaphragm STO is further arranged between an object OBJ and the first lens L1, to further improve the imaging quality of the optical lens assembly.

The optical lens assembly further includes a filter L7 having an object-side surface S13 and an image-side surface S14. Light from the object OBJ sequentially passes through the surfaces S1 to S14 and is finally imaged on the imaging surface S15. Further, the filter L7 is an infrared filter, configured to filter out infrared light in external light incident into the optical lens assembly to avoid imaging distortion.

Table 3 shows surface types, curvature radii, thicknesses, materials, refractive indexes, Abbe numbers (i.e., dispersion coefficients) and effective focal lengths of the lenses of the optical lens assembly according to Embodiment 2, wherein the curvature radii, the thicknesses and the effective focal lengths of the lenses are all in millimeters (mm). Table 4 shows higher-order-term coefficients applicable to the aspheric surfaces S1 to S12 of the lenses in Embodiment 2, wherein the aspheric surface types may be defined by the formula (1) provided in Embodiment 1. Table 5 shows values of related parameters of the optical lens assembly according to Embodiment 2. A reference wavelength is 555 nm.

Table 3

| Embodiment 2 | | | | | | | | |
|---|---|---|---|---|---|---|---|---|
| f=4.07 mm, FNO=1.8, FOV=78°, TTL=4.88 mm | | | | | | | | |
| Surface number | Surface name | Surface type | Curvature radius | Thickness | Material | Refractive index | Abbe number | Focal length |
| OBJ | Object surface | Spherical | Infinity | 1000.00 | | | | |
| STO | Diaphragm | Spherical | Infinity | -0.350 | | | | |
| S1 | First lens | Aspheric | 1.696 | 0.432 | Plastic | 1.544 | 56.114 | 7.297 |
| S2 | | Aspheric | 2.687 | 0.131 | | | | |
| S3 | Second lens | Aspheric | 3.004 | 0.425 | Plastic | 1.544 | 56.114 | 4.822 |
| S4 | | Aspheric | -20.201 | 0.080 | | | | |

(continued)

| Embodiment 2 | | | | | | | | |
|---|---|---|---|---|---|---|---|---|
| f=4.07 mm, FNO=1.8, FOV=78°, TTL=4.88 mm | | | | | | | | |
| Surface number | Surface name | Surface type | Curvature radius | Thickness | Material | Refractive index | Abbe number | Focal length |
| S5 | Third lens | Aspheric | 8.811 | 0.200 | Plastic | 1.660 | 20.370 | -6.892 |
| S6 | | Aspheric | 2.993 | 0.470 | | | | |
| S7 | Fourth lens | Aspheric | -13.783 | 0.443 | Plastic | 1.640 | 23.530 | 70.334 |
| S8 | | Aspheric | -10.703 | 0.373 | | | | |
| S9 | Fifth lens | Aspheric | 3.600 | 0.621 | Plastic | 1.544 | 56.114 | -33.074 |
| S10 | | Aspheric | 2.819 | 0.294 | | | | |
| S11 | Sixth lens | Aspheric | 1.306 | 0.439 | Plastic | 1.544 | 56.114 | -31.216 |
| S12 | | Aspheric | 1.069 | 0.441 | | | | |
| S13 | Infrared filter | Spherical | Infinity | 0.210 | Glass | 1.517 | 64.167 | |
| S14 | | Spherical | Infinity | 0.385 | | | | |
| S15 | Imaging surface | Spherical | Infinity | -0.062 | | | | |

Table 4

| Embodiment 2 | | | | | | |
|---|---|---|---|---|---|---|
| Aspheric coefficient | | | | | | |
| Surface number | S1 | S2 | S3 | S4 | S5 | S6 |
| K | -7.9888E+00 | -1.2009E+01 | -4.5490E+00 | 5.9793E+01 | 5.8989E+01 | -7.3579E+00 |
| A4 | 1.8595E-01 | 2.6093E-02 | -2.6361E-02 | 1.9987E-02 | 2.5985E-02 | 5.6098E-02 |
| A6 | -2.0782E-01 | -1.0320E-01 | -3.6874E-02 | -2.1898E-01 | -2.8797E-01 | -1.4584E-01 |
| A8 | 2.1515E-01 | 5.6751E-02 | -9.0020E-02 | 3.6373E-01 | 6.4634E-01 | 4.1544E-01 |
| A10 | -1.7938E-01 | 2.1126E-03 | 2.6783E-01 | -3.0424E-01 | -7.9364E-01 | -6.5604E-01 |
| A12 | 8.1795E-02 | 0.0000E+00 | -2.0210E-01 | 1.0771E-01 | 4.8942E-01 | 6.3634E-01 |
| A14 | -1.5160E-02 | 0.0000E+00 | 5.4961E-02 | -6.5442E-03 | -1.1616E-01 | -3.5479E-01 |
| A16 | 0.0000E+00 | 0.0000E+00 | 0.0000E+00 | 0.0000E+00 | 0.0000E+00 | 9.6994E-02 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |
| Surface number | S7 | S8 | S9 | S10 | S11 | S12 |
| K | -8.8568E+01 | -9.9000E+01 | -2.3506E+01 | -3.0011E+01 | -1.7753E+00 | -3.0528E+00 |
| A4 | -5.6032E-02 | -7.2523E-02 | 2.5605E-02 | 2.2844E-02 | -3.6356E-01 | -1.9759E-01 |
| A6 | -6.0775E-03 | -5.9705E-02 | -1.1766E-01 | -3.1688E-02 | 1.9484E-01 | 1.0632E-01 |
| A8 | -4.4168E-03 | 1.5406E-01 | 8.1936E-02 | 7.5709E-03 | -6.5052E-02 | -4.0715E-02 |
| A10 | 6.5849E-02 | -1.7165E-01 | -4.0194E-02 | 1.6048E-04 | 1.3927E-02 | 9.8488E-03 |
| A12 | -1.2438E-01 | 1.1349E-01 | 1.1301E-02 | -6.3609E-04 | -1.8138E-03 | -1.3940E-03 |
| A14 | 1.0331E-01 | -3.8190E-02 | -1.4527E-03 | 1.4541E-04 | 1.3064E-04 | 1.0524E-04 |

(continued)

| Surface number | S7 | S8 | S9 | S10 | S11 | S12 |
|---|---|---|---|---|---|---|
| A16 | -3.4618E-02 | 4.7595E-03 | 5.3779E-05 | -1.0233E-05 | -4.0017E-06 | -3.2713E-06 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |

Table 5

| f(mm) | 4.07 | R5/R6 | 2.944 |
|---|---|---|---|
| FNO | 1.8 | R9/f+R10/f | 1.577 |
| FOV (°) | 78 | MAX(cra) (°) | 34.1 |
| ImgH (mm) | 3.4 | f1/OAL | 1.867 |
| TTL (mm) | 4.88 | T34/P | 0.422 |
| f123/f456 | -0.22 | MIN(T56)/MAX(T56) | 0.415 |
| TTL/ImgH | 1.435 | |f1/CT1|+|f2/CT2|+|f3/CT3|+|f4/CT4|+|f 5/CT5|+|f6/CT6| | 345.831 |
| EPD/TTL | 0.465 | | |

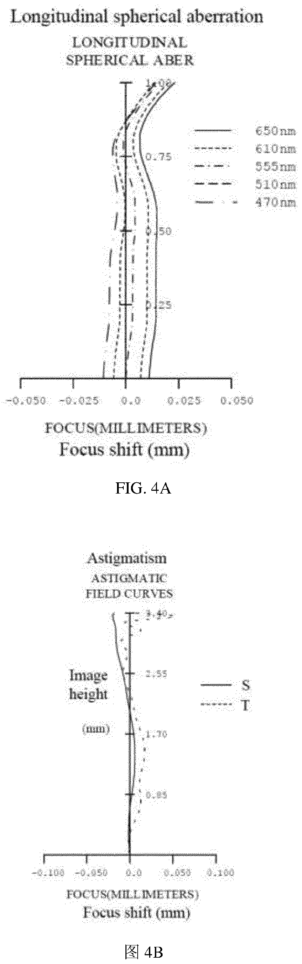

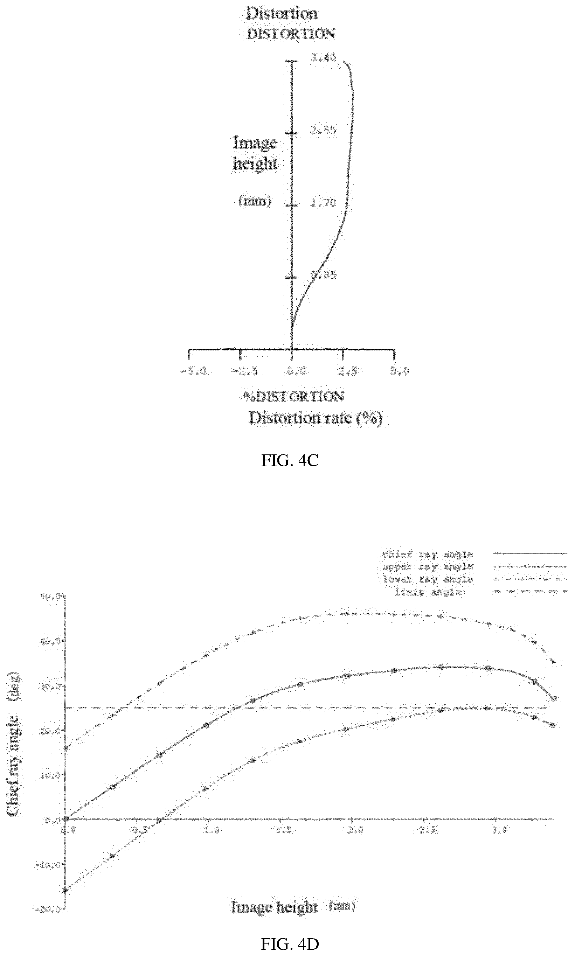

Figure 4A shows longitudinal spherical aberration curves of the optical lens assembly according to Embodiment 2, which respectively indicate focus shift of light with different wavelengths after convergence through the optical lens assembly. Figure 4B shows astigmatic field curves of the optical lens assembly according to Embodiment 2, which indicate curvature of a tangential image surface and curvature of a sagittal image surface. Figure 4C shows distortion curves of the optical lens assembly according to Embodiment 2, which indicate distortion rates at different image heights. Figure 4D shows chief ray angle curves on the imaging surface S15 of the optical lens assembly according to Embodiment 2, which indicates angles at which a chief ray is incident to a photosensitive element at different image heights. It may be known from Figure 4A to Figure 4D that the optical lens assembly according to Embodiment 2 can achieve good imaging quality.

Embodiment 3

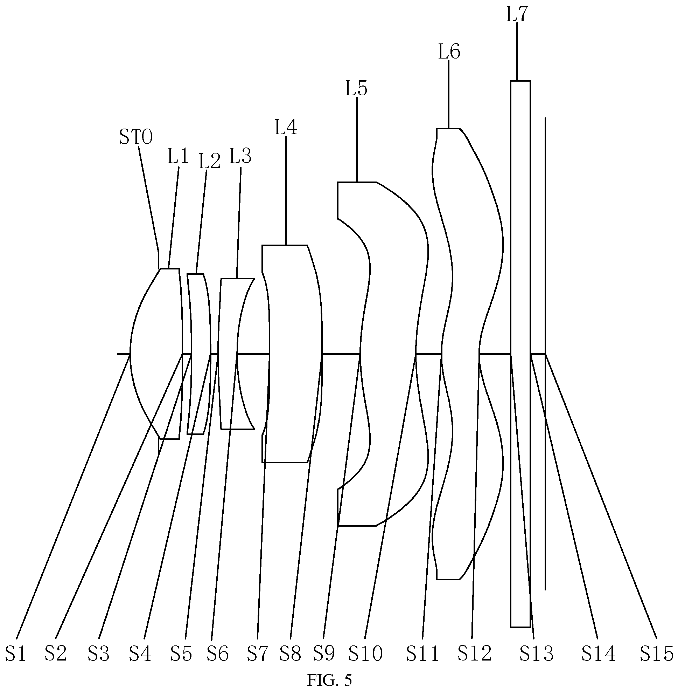

An optical lens assembly according to Embodiment 3 of the present application is described below with reference to Figure 5 to Figure 6D. In this embodiment, for brevity, the description similar to that of Embodiment 1 will be omitted. Figure 5 is a schematic structural diagram of an optical lens assembly according to Embodiment 3 of the present application.

As shown in Figure 5, the optical lens assembly includes a first lens L1, a second lens L2, a third lens L3, a fourth lens L4, a fifth lens L5, a sixth lens L6 and an imaging surface S15 in sequence from an object side to an image side along an optical axis.

The first lens L1 has positive focal power, with an object-side surface S1 being convex at the optical axis and convex at the circumference and an image-side surface S2 being convex at the optical axis and convex at the circumference.

The second lens L2 has negative focal power, with an object-side surface S3 being concave at the optical axis and concave at the circumference and an image-side surface S4 being convex at the optical axis and convex at the circumference.

The third lens L3 has negative focal power, with an object-side surface S5 being convex at the optical axis and convex at the circumference and an image-side surface S6 being concave at the optical axis and concave at the circumference.

The fourth lens L4 has negative focal power, with an object-side surface S7 being concave at the optical axis and concave at the circumference and an image-side surface S8 being convex at the optical axis and convex at the circumference.

The fifth lens L5 has positive focal power, with an object-side surface S9 being convex at the optical axis and concave at the circumference and an image-side surface S10 being concave at the optical axis and convex at the circumference.

The sixth lens L6 has negative focal power, with an object-side surface S11 being convex at the optical axis and convex at the circumference and an image-side surface S12 being concave at the optical axis and convex at the circumference.

The object-side surface and the image-side surface of each of the first lens L1 to the sixth lens L6 are both aspheric. The design of aspheric surfaces can solve the problem of distortion of the field of view, and enable the lens to achieve an excellent optical imaging effect in the case of being smaller, thinner and flatter, so as to make the optical lens assembly have miniaturization characteristics.

The first lens L1 to the sixth lens L6 are all made of plastic. The lens made of plastic can reduce the weight of the optical lens assembly and can further reduce manufacturing costs.

A diaphragm STO is further arranged between an object OBJ and the first lens L1, to further improve the imaging quality of the optical lens assembly.

The optical lens assembly further includes a filter L7 having an object-side surface S13 and an image-side surface S14. Light from the object OBJ sequentially passes through the surfaces S1 to S14 and is finally imaged on the imaging surface S15. Further, the filter L7 is an infrared filter, configured to filter out infrared light in external light incident into the optical lens assembly to avoid imaging distortion.

Table 6 shows surface types, curvature radii, thicknesses, materials, refractive indexes, Abbe numbers (i.e., dispersion coefficients) and effective focal lengths of the lenses of the optical lens assembly according to Embodiment 3, wherein the curvature radii, the thicknesses and the effective focal lengths of the lenses are all in millimeters (mm). Table 7 shows higher-order-term coefficients applicable to the aspheric surfaces S1 to S12 of the lenses in Embodiment 3, wherein the aspheric surface types may be defined by the formula (1) provided in Embodiment 1. Table 8 shows values of related parameters of the optical lens assembly according to Embodiment 3. A reference wavelength is 555 nm.

Table 6

| Embodiment 3 | | | | | | | | |
|---|---|---|---|---|---|---|---|---|
| f=3.545, FNO=1.8, FOV=72.27, TTL=4.37 mm | | | | | | | | |
| Surface number | Surface name | Surface type | Curvature radius | Thickness | Material | Refractive index | Abbe number | Focal length |
| OBJ | Object surface | Spherical | Infinity | 1000.00 | | | | |
| STO | Diaphragm | Spherical | Infinity | -0.297 | | | | |
| S1 | First lens | Aspheric | 1.533 | 0.549 | Plastic | 1.544 | 56.114 | 2.73 |
| S2 | | Aspheric | -46.708 | 0.097 | | | | |
| S3 | Second lens | Aspheric | -13.855 | 0.200 | Plastic | 1.544 | 56.114 | -100.00 |
| S4 | | Aspheric | -18.662 | 0.080 | | | | |
| S5 | Third lens | Aspheric | 7.792 | 0.200 | Plastic | 1.660 | 20.370 | -5.78 |
| S6 | | Aspheric | 2.553 | 0.344 | | | | |
| S7 | Fourth lens | Aspheric | -91.872 | 0.552 | Plastic | 1.640 | 23.530 | -3424.11 |
| S8 | | Aspheric | -96.088 | 0.399 | | | | |
| S9 | Fifth lens | Aspheric | 2.646 | 0.585 | Plastic | 1.544 | 56.114 | 65.96 |
| S10 | | Aspheric | 2.633 | 0.271 | | | | |
| S11 | Sixth lens | Aspheric | 1.300 | 0.398 | Plastic | 1.544 | 56.114 | -21.01 |
| S12 | | Aspheric | 1.041 | 0.331 | | | | |
| S13 | Infrared filter | Spherical | Infinity | 0.210 | Glass | 1.517 | 64.167 | |
| S14 | | Spherical | Infinity | 0.210 | | | | |
| S15 | Imaging surface | Spherical | Infinity | -0.055 | | | | |

Table 7

| Embodiment 3 | | | | | |
|---|---|---|---|---|---|
| Aspheric coefficient | | | | | |
| Surface number | S1 | S2 | S3 | S4 | S5 | S6 |
| K | -7.3921E+00 | -9.9000E+01 | -9.9000E+01 | 6.1811E+01 | 5.7390E+01 | -4.6722E+00 |
| A4 | 2.4094E-01 | -4.4693E-02 | -7.6348E-02 | -1.0455E-02 | 4.1576E-02 | 9.5352E-02 |
| A6 | -2.4948E-01 | 6.4840E-02 | 1.3715E-01 | -2.1012E-01 | -4.0847E-01 | -2.0583E-01 |
| A8 | 2.2994E-01 | -9.9480E-02 | -2.0202E-01 | 2.2078E-01 | 5.2785E-01 | 3.9637E-01 |
| A10 | -1.1366E-01 | 5.3745E-02 | 1.2869E-01 | 1.0908E-01 | 6.1133E-03 | -3.6158E-01 |
| A12 | -4.0342E-02 | 0.0000E+00 | 1.0273E-01 | -3.0192E-01 | -4.7122E-01 | 5.0165E-01 |
| A14 | 3.4367E-02 | 0.0000E+00 | -1.1193E-01 | 1.0819E-01 | 2.4618E-01 | -6.1466E-01 |
| A16 | 0.0000E+00 | 0.0000E+00 | 0.0000E+00 | 0.0000E+00 | 0.0000E+00 | 3.3184E-01 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |
| Surface number | S7 | S8 | S9 | S10 | S11 | S12 |
| K | -9.9000E+01 | 9.9000E+01 | -1.3174E+01 | -3.0841E+01 | -1.6635E+00 | -2.4860E+00 |
| A4 | -6.9882E-02 | -9.3672E-02 | 1.4373E-02 | 3.3538E-02 | -4.2045E-01 | -2.6271E-01 |
| A6 | -3.1089E-02 | -2.2429E-03 | -7.0549E-02 | -2.7172E-02 | 2.6134E-01 | 1.7571E-01 |
| A8 | 7.7131E-02 | 7.0723E-02 | 1.0768E-02 | -1.4858E-02 | -1.0270E-01 | -8.2654E-02 |
| A10 | -1.7327E-01 | -1.0473E-01 | 1.7481E-02 | 1.6981E-02 | 2.6175E-02 | 2.4394E-02 |
| A12 | 1.4315E-01 | 7.9516E-02 | -1.8204E-02 | -7.2350E-03 | -4.0715E-03 | -4.1969E-03 |
| A14 | -4.2884E-03 | -2.7251E-02 | 6.5558E-03 | 1.4651E-03 | 3.4941E-04 | 3.8339E-04 |
| A16 | -4.6677E-02 | 3.0524E-03 | -7.9181E-04 | -1.1410E-04 | -1.2680E-05 | -1.4353E-05 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |

Table 8

| | | | |
|---|---|---|---|
| f(mm) | 3.545 | R5/R6 | 3.052 |
| FNO | 1.8 | R9/f+R10/f | 1.489 |
| FOV (°) | 72.27 | MAX(cra) (°) | 31.5 |
| ImgH (mm) | 2.73 | f1/OAL | 0.743 |
| TTL (mm) | 4.37 | T34/P | 0.314 |
| f123/f456 | -0.114 | MIN(T56)/MAX(T56) | 0.349 |
| TTL/ImgH | 1.601 | |f1/CT1|+|f2/CT2|+|f3/CT3|+|f4/CT4|+|f 5/CT5|+|f6/CT6| | 6902.512 |
| EPD/TTL | 0.451 | | |

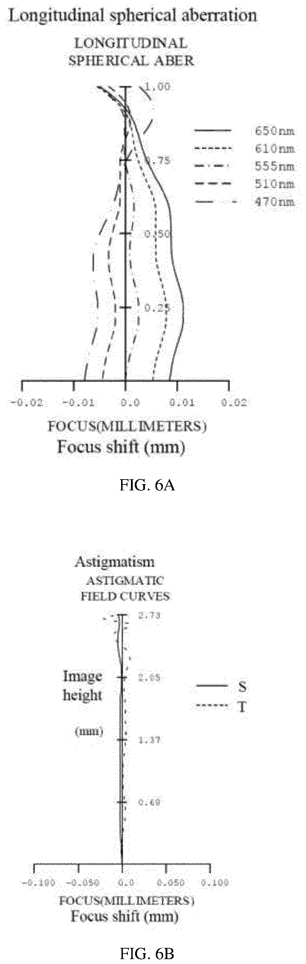

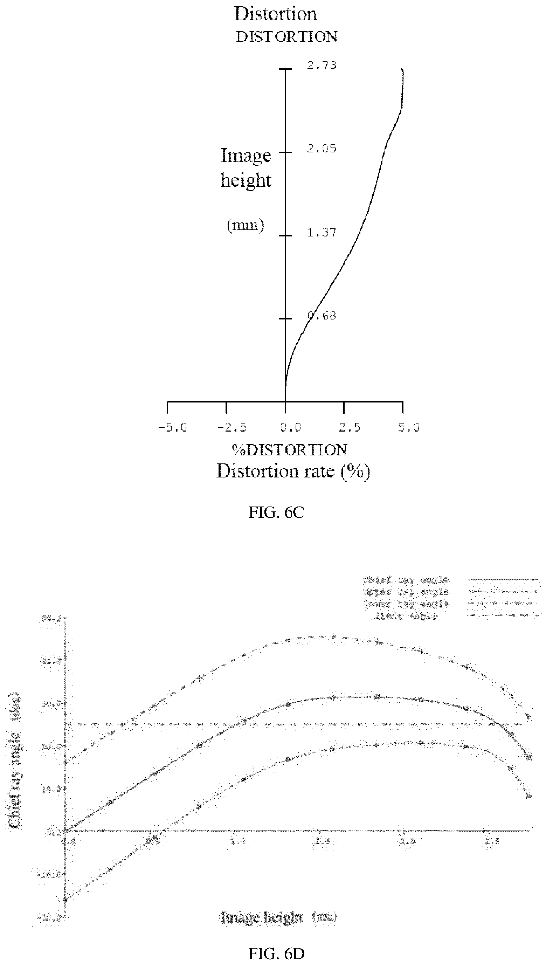

Figure 6A shows longitudinal spherical aberration curves of the optical lens assembly according to Embodiment 3, which respectively indicate focus shift of light with different wavelengths after convergence through the optical lens assembly. Figure 6B shows astigmatic field curves of the optical lens assembly according to Embodiment 3, which indicate curvature of a tangential image surface and curvature of a sagittal image surface. Figure 6C shows distortion curves of the optical lens assembly according to Embodiment 3, which indicate distortion rates at different image heights.

Figure 6D shows chief ray angle curves on the imaging surface S15 of the optical lens assembly according to Embodiment 3, which indicates angles at which a chief ray is incident to a photosensitive element at different image heights. It may be known from Figure 6A to Figure 6D that the optical lens assembly according to Embodiment 3 can achieve good imaging quality.

Embodiment 4

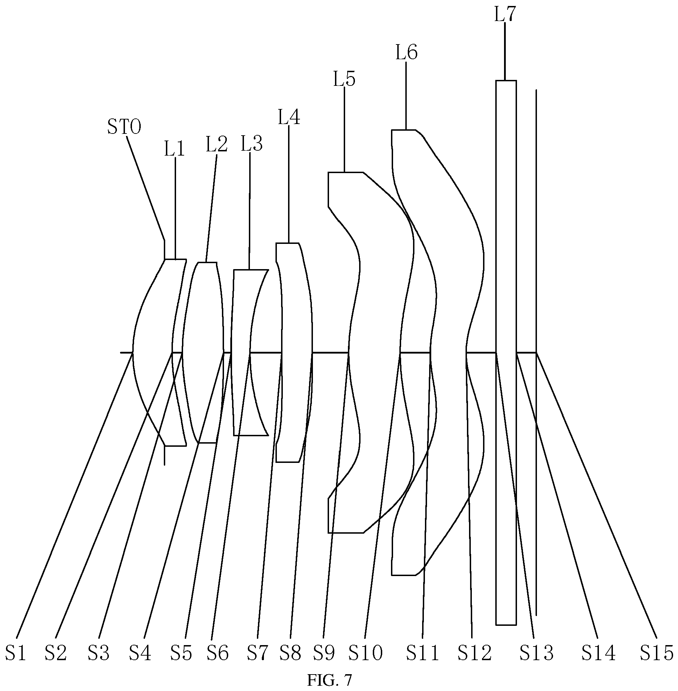

An optical lens assembly according to Embodiment 4 of the present application is described below with reference to Figure 7 to Figure 8D. In this embodiment, for brevity, the description similar to that of Embodiment 1 will be omitted. Figure 7 is a schematic structural diagram of an optical lens assembly according to Embodiment 4 of the present application.

As shown in Figure 7, the optical lens assembly includes a first lens L1, a second lens L2, a third lens L3, a fourth lens L4, a fifth lens L5, a sixth lens L6 and an imaging surface S15 in sequence from an object side to an image side along an optical axis.

The first lens L1 has positive focal power, with an object-side surface S1 being convex at the optical axis and convex at the circumference and an image-side surface S2 being concave at the optical axis and concave at the circumference.

The second lens L2 has positive focal power, with an object-side surface S3 being convex at the optical axis and convex at the circumference and an image-side surface S4 being convex at the optical axis and convex at the circumference.

The third lens L3 has negative focal power, with an object-side surface S5 being convex at the optical axis and convex at the circumference and an image-side surface S6 being concave at the optical axis and concave at the circumference.

The fourth lens L4 has positive focal power, with an object-side surface S7 being convex at the optical axis and concave at the circumference and an image-side surface S8 being concave at the optical axis and convex at the circumference.

The fifth lens L5 has positive focal power, with an object-side surface S9 being convex at the optical axis and concave at the circumference and an image-side surface S10 being concave at the optical axis and convex at the circumference.

The sixth lens L6 has negative focal power, with an object-side surface S11 being convex at the optical axis and concave at the circumference and an image-side surface S12 being concave at the optical axis and convex at the circumference.

The object-side surface and the image-side surface of each of the first lens L1 to the sixth lens L6 are both aspheric. The design of aspheric surfaces can solve the problem of distortion of the field of view, and enable the lens to achieve an excellent optical imaging effect in the case of being smaller, thinner and flatter, so as to make the optical lens assembly have miniaturization characteristics.

The first lens L1 to the sixth lens L6 are all made of plastic. The lens made of plastic can reduce the weight of the optical lens assembly and can further reduce manufacturing costs.

A diaphragm STO is further arranged between an object OBJ and the first lens L1, to further improve the imaging quality of the optical lens assembly.

The optical lens assembly further includes a filter L7 having an object-side surface S13 and an image-side surface S14. Light from the object OBJ sequentially passes through the surfaces S1 to S14 and is finally imaged on the imaging surface S15. Further, the filter L7 is an infrared filter, configured to filter out infrared light in external light incident into the optical lens assembly to avoid imaging distortion.

Table 9 shows surface types, curvature radii, thicknesses, materials, refractive indexes, Abbe numbers (i.e., dispersion coefficients) and effective focal lengths of the lenses of the optical lens assembly according to Embodiment 4, wherein the curvature radii, the thicknesses and the effective focal lengths of the lenses are all in millimeters (mm). Table 10 shows higher-order-term coefficients applicable to the aspheric surfaces S1 to S12 of the lenses in Embodiment 4, wherein the aspheric surface types may be defined by the formula (1) provided in Embodiment 1. Table 11 shows values of related parameters of the optical lens assembly according to Embodiment 4. A reference wavelength is 555 nm.

Table 9

| Embodiment 4 | | | | | | | | |
|---|---|---|---|---|---|---|---|---|
| f=3.434 mm, FNO=1.6, FOV=80.8°, TTL=4.247 mm | | | | | | | | |
| Surface number | Surface name | Surface type | Curvature radius | Thickne ss | Materia l | Refracti ve index | Abbe number | Focal length |
| OBJ | Object surface | Spherical | Infinity | 1000.00 | | | | |
| STO | Diaphragm | Spherical | Infinity | -0.333 | | | | |
| S1 | First lens | Aspheric | 1.546 | 0.413 | Plastic | 1.544 | 56.114 | 7.492 |
| S2 | | Aspheric | 2.252 | 0.109 | | | | |
| S3 | Second lens | Aspheric | 2.600 | 0.433 | Plastic | 1.544 | 56.114 | 4.078 |
| S4 | | Aspheric | -14.581 | 0.080 | | | | |
| S5 | Third lens | Aspheric | 8.848 | 0.200 | Plastic | 1.660 | 20.370 | -5.687 |
| S6 | | Aspheric | 2.631 | 0.335 | | | | |
| S7 | Fourth lens | Aspheric | 16.863 | 0.320 | Plastic | 1.640 | 23.530 | 31.312 |
| S8 | | Aspheric | 101.753 | 0.381 | | | | |
| S9 | Fifth lens | Aspheric | 2.322 | 0.543 | Plastic | 1.544 | 56.114 | 23.020 |
| S10 | | Aspheric | 2.613 | 0.317 | | | | |
| S11 | Sixth lens | Aspheric | 1.445 | 0.378 | Plastic | 1.544 | 56.114 | -8.643 |
| S12 | | Aspheric | 1.004 | 0.316 | | | | |
| S13 | Infrared filter | Spherical | Infinity | 0.210 | Glass | 1.517 | 64.167 | |
| S14 | | Spherical | Infinity | 0.266 | | | | |
| S15 | Imaging surface | Spherical | Infinity | -0.055 | | | | |

Table 10

| Embodiment 4 | | | | | | |
|---|---|---|---|---|---|---|
| Aspheric coefficient | | | | | | |
| Surface number | S1 | S2 | S3 | S4 | S5 | S6 |
| K | -8.3672E+00 | -1.1925E+01 | -4.9150E+00 | -5.4058E+01 | 5.8089E+01 | -8.2182E+00 |
| A4 | 2.5045E-01 | 4.5013E-02 | -5.0297E-02 | -8.6922E-03 | -5.3926E-03 | 5.2323E-02 |
| A6 | -3.3603E-01 | -1.8568E-01 | -1.2066E-02 | -1.2410E-01 | -1.6577E-01 | -5.5166E-02 |
| A8 | 3.8810E-01 | 1.2459E-01 | -2.2258E-01 | 2.0821E-01 | 4.7713E-01 | 2.1957E-01 |
| A10 | -3.4172E-01 | -8.1089E-03 | 6.0396E-01 | -1.2234E-01 | -8.1919E-01 | -4.8225E-01 |
| A12 | 1.5625E-01 | 0.0000E+00 | -5.0002E-01 | -5.7023E-02 | 6.4680E-01 | 5.6788E-01 |
| A14 | -2.8117E-02 | 0.0000E+00 | 1.5377E-01 | 6.6078E-02 | -1.7682E-01 | -3.6262E-01 |
| A16 | 0.0000E+00 | 0.0000E+00 | 0.0000E+00 | 0.0000E+00 | 0.0000E+00 | 1.2746E-01 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |
| Surface number | S7 | S8 | S9 | S10 | S11 | S12 |
| K | 9.9000E+01 | -9.9000E+01 | -1.4599E+01 | -4.1416E+01 | -1.7968E+00 | -3.5899E+00 |

(continued)

| Surface number | S7 | S8 | S9 | S10 | S11 | S12 |
|---|---|---|---|---|---|---|
| A4 | -9.8879E-02 | -1.4462E-01 | 4.1222E-02 | 7.8483E-02 | -5.7742E-01 | -2.8420E-01 |
| A6 | 4.8307E-02 | 6.2312E-02 | -9.5334E-02 | -7.4580E-02 | 4.1335E-01 | 1.9967E-01 |
| A8 | -6.8338E-02 | 6.8538E-03 | 8.9684E-03 | 1.4373E-02 | -1.8249E-01 | -1.0026E-01 |
| A10 | 2.6521E-01 | -2.7467E-02 | 3.0858E-02 | 5.2678E-03 | 5.1138E-02 | 3.1463E-02 |
| A12 | -5.0546E-01 | 3.4843E-02 | -2.7020E-02 | -3.9889E-03 | -8.6312E-03 | -5.7317E-03 |
| A14 | 4.3971E-01 | -1.5252E-02 | 9.6915E-03 | 9.0755E-04 | 7.9833E-04 | 5.5366E-04 |
| A16 | -1.5311E-01 | 7.5356E-04 | -1.2345E-03 | -7.0810E-05 | -3.1153E-05 | -2.1907E-05 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |

Table 11

| f(mm) | 3.434 | R5/R6 | 3.363 |
|---|---|---|---|
| FNO | 1.6 | R9/f+R10/f | 1.437 |
| FOV (°) | 80.8 | MAX(cra) (°) | 34.5 |
| ImgH (mm) | 3.03 | f1/OAL | 2.135 |
| TTL (mm) | 4.247 | T34/P | 0.392 |
| f123/f456 | -0.057 | MIN(T56)/MAX(T56) | 0.063 |
| TTL/ImgH | 1.402 | \|f1/CT1\|+\|f2/CT2\|+\|f3/CT3\|+\|f4/CT4\|+\|f 5/CT5\|+\|f6/CT6\| | 219.103 |
| EPD/TTL | 0.508 | | |

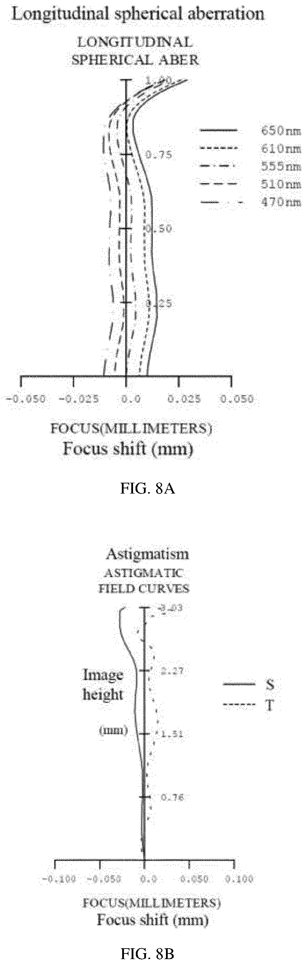

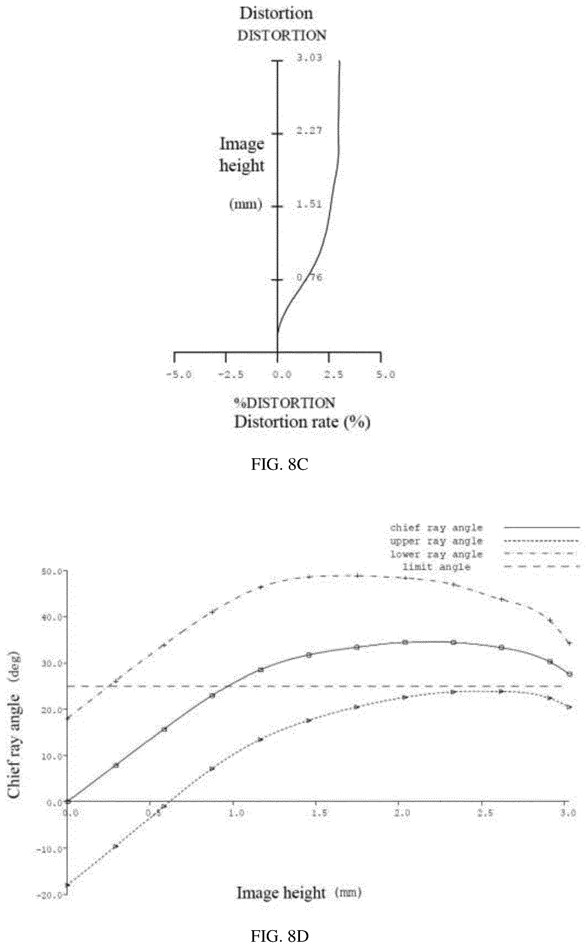

Figure 8A shows longitudinal spherical aberration curves of the optical lens assembly according to Embodiment 4, which respectively indicate focus shift of light with different wavelengths after convergence through the optical lens assembly. Figure 8B shows astigmatic field curves of the optical lens assembly according to Embodiment 4, which indicate curvature of a tangential image surface and curvature of a sagittal image surface. Figure 8C shows distortion curves of the optical lens assembly according to Embodiment 4, which indicate distortion rates at different image heights. Figure 8D shows chief ray angle curves on the imaging surface S15 of the optical lens assembly according to Embodiment 4, which indicates angles at which a chief ray is incident to a photosensitive element at different image heights. It may be known from Figure 8A to Figure 8D that the optical lens assembly according to Embodiment 4 can achieve good imaging quality.

Embodiment 5

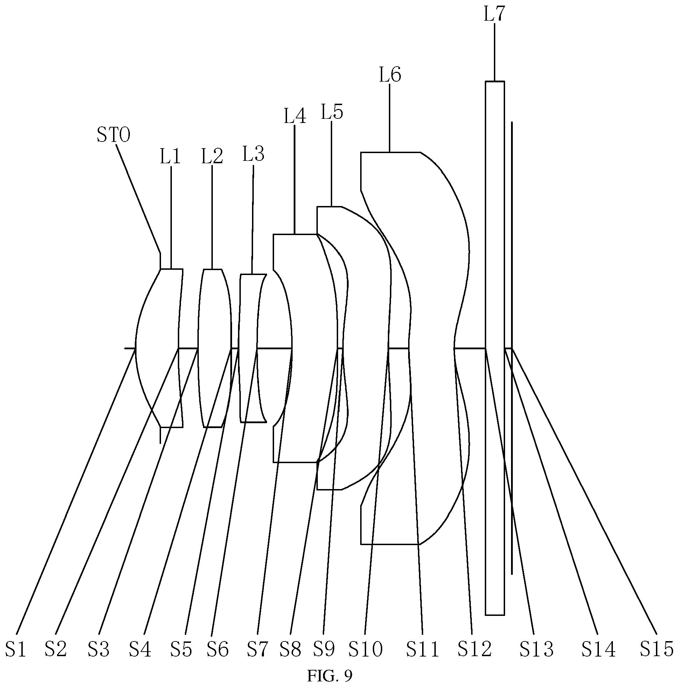

An optical lens assembly according to Embodiment 5 of the present application is described below with reference to Figure 9 to Figure 10D. In this embodiment, for brevity, the description similar to that of Embodiment 1 will be omitted. Figure 9 is a schematic structural diagram of an optical lens assembly according to Embodiment 5 of the present application.

As shown in Figure 9, the optical lens assembly includes a first lens L1, a second lens L2, a third lens L3, a fourth lens L4, a fifth lens L5, a sixth lens L6 and an imaging surface S15 in sequence from an object side to an image side along an optical axis.

The first lens L1 has positive focal power, with an object-side surface S1 being convex at the optical axis and convex at the circumference and an image-side surface S2 being concave at the optical axis and concave at the circumference.

The second lens L2 has positive focal power, with an object-side surface S3 being convex at the optical axis and convex at the circumference and an image-side surface S4 being convex at the optical axis and convex at the circumference.

The third lens L3 has positive focal power, with an object-side surface S5 being convex at the optical axis and convex at the circumference and an image-side surface S6 being concave at the optical axis and concave at the circumference.

The fourth lens L4 has negative focal power, with an object-side surface S7 being concave at the optical axis and concave at the circumference and an image-side surface S8 being convex at the optical axis and convex at the circumference.

The fifth lens L5 has positive focal power, with an object-side surface S9 being convex at the optical axis and concave at the circumference and an image-side surface S10 being concave at the optical axis and convex at the circumference.

The sixth lens L6 has negative focal power, with an object-side surface S11 being convex at the optical axis and concave at the circumference and an image-side surface S12 being concave at the optical axis and convex at the circumference.

The object-side surface and the image-side surface of each of the first lens L1 to the sixth lens L6 are both aspheric. The design of aspheric surfaces can solve the problem of distortion of the field of view, and enable the lens to achieve an excellent optical imaging effect in the case of being smaller, thinner and flatter, so as to make the optical lens assembly have miniaturization characteristics.

The first lens L1 to the sixth lens L6 are all made of plastic. The lens made of plastic can reduce the weight of the optical lens assembly and can further reduce manufacturing costs.

A diaphragm STO is further arranged between an object OBJ and the first lens L1, to further improve the imaging quality of the optical lens assembly.

The optical lens assembly further includes a filter L7 having an object-side surface S13 and an image-side surface S14. Light from the object OBJ sequentially passes through the surfaces S1 to S14 and is finally imaged on the imaging surface S15. Further, the filter L7 is an infrared filter, configured to filter out infrared light in external light incident into the optical lens assembly to avoid imaging distortion.

Table 12 shows surface types, curvature radii, thicknesses, materials, refractive indexes, Abbe numbers (i.e., dispersion coefficients) and effective focal lengths of the lenses of the optical lens assembly according to Embodiment 5, wherein the curvature radii, the thicknesses and the effective focal lengths of the lenses are all in millimeters (mm). Table 13 shows higher-order-term coefficients applicable to the aspheric surfaces S1 to S12 of the lenses in Embodiment 5, wherein the aspheric surface types may be defined by the formula (1) provided in Embodiment 1. Table 14 shows values of related parameters of the optical lens assembly according to Embodiment 5. A reference wavelength is 555 nm.

Table 12

| Surface number | Surface name | Surface type | Curvature radius | Thickness | Material | Refractive index | Abbe number | Focal length |
|---|---|---|---|---|---|---|---|---|
| Embodiment 5 | | | | | | | | |
| f=3.434 mm, FNO=1.8, FOV=76.0°, TTL=4.14 mm | | | | | | | | |
| OBJ | Object surface | Spherical | Infinity | 1000.00 | | | | |
| STO | Diaphragm | Spherical | Infinity | -0.272 | | | | |
| S1 | First lens | Aspheric | 1.551 | 0.471 | Plastic | 1.544 | 56.114 | 3.623 |
| S2 | | Aspheric | 6.420 | 0.217 | | | | |
| S3 | Second lens | Aspheric | 10.627 | 0.367 | Plastic | 1.544 | 56.114 | 14.583 |
| S4 | | Aspheric | -31.338 | 0.080 | | | | |
| S5 | Third lens | Aspheric | 7.790 | 0.205 | Plastic | 1.660 | 20.370 | 50.000 |
| S6 | | Aspheric | 10.057 | 0.386 | | | | |
| S7 | Fourth lens | Aspheric | -3.375 | 0.500 | Plastic | 1.640 | 23.530 | -5.960 |
| S8 | | Aspheric | -29.330 | 0.056 | | | | |
| S9 | Fifth lens | Aspheric | 2.784 | 0.500 | Plastic | 1.544 | 56.114 | 14.254 |
| S10 | | Aspheric | 4.061 | 0.226 | | | | |

(continued)

| Embodiment 5 | | | | | | | | |
|---|---|---|---|---|---|---|---|---|
| f=3.434 mm, FNO=1.8, FOV=76.0°, TTL=4.14 mm | | | | | | | | |
| Surface number | Surface name | Surface type | Curvature radius | Thickness | Material | Refractive index | Abbe number | Focal length |
| S11 | Sixth lens | Aspheric | 2.199 | 0.500 | Plastic | 1.544 | 56.114 | -5.318 |
| S12 | | Aspheric | 1.151 | 0.345 | | | | |
| S13 | Infrared filter | Spherical | Infinity | 0.210 | Glass | 1.517 | 64.167 | |
| S14 | | Spherical | Infinity | 0.137 | | | | |
| S15 | Imaging surface | Spherical | Infinity | -0.056 | | | | |

Table 13

| Embodiment 5 | | | | | | |
|---|---|---|---|---|---|---|
| Aspheric coefficient | | | | | | |
| Surface number | S1 | S2 | S3 | S4 | S5 | S6 |
| K | -8.3989E+00 | 4.5723E+00 | 9.8763E+01 | 9.9000E+01 | 4.8330E+01 | 1.1058E+01 |
| A4 | 2.5426E-01 | -9.7505E-03 | 1.2224E-02 | -3.3111E-03 | 6.4547E-02 | 1.4368E-01 |
| A6 | -3.4499E-01 | -7.4574E-03 | 1.2471E-02 | -5.0189E-01 | -6.2553E-01 | -4.1701E-01 |
| A8 | 4.1800E-01 | -4.1528E-02 | -1.1196E-01 | 9.2244E-01 | 8.6946E-01 | 9.7177E-01 |
| A10 | -4.1533E-01 | 3.3295E-02 | 2.0995E-01 | -8.8857E-01 | -3.5075E-01 | -2.1306E+00 |
| A12 | 2.1436E-01 | 0.0000E+00 | -1.5855E-01 | 4.6622E-01 | -6.3543E-02 | 4.1099E+00 |
| A14 | -4.5845E-02 | 0.0000E+00 | 4.1071E-02 | -1.0606E-01 | 7.1793E-02 | -4.3137E+00 |
| A16 | 0.0000E+00 | 0.0000E+00 | 0.0000E+00 | 0.0000E+00 | 0.0000E+00 | 1.8667E+00 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |
| Surface number | S7 | S8 | S9 | S10 | S11 | S12 |
| K | 8.1922E+00 | 9.9000E+01 | -2.9745E+01 | -9.9000E+01 | -1.3276E+00 | -6.5040E+00 |
| A4 | 6.9824E-02 | -9.0992E-02 | -4.0385E-02 | -1.4549E-01 | -7.2781E-01 | -2.0435E-01 |
| A6 | -1.0502E-01 | 5.9869E-03 | -5.3174E-02 | 2.9503E-01 | 7.3689E-01 | 1.5733E-01 |
| A8 | -3.6119E-01 | 4.0151E-02 | 6.4062E-02 | -3.2973E-01 | -4.6226E-01 | -7.7455E-02 |
| A10 | 1.7474E+00 | -8.6640E-02 | -1.5563E-01 | 1.8958E-01 | 1.7427E-01 | 2.2365E-02 |
| A12 | -3.4656E+00 | 9.1760E-02 | 1.4825E-01 | -6.1906E-02 | -3.7433E-02 | -3.6976E-03 |
| A14 | 3.3002E+00 | -4.1137E-02 | -6.1623E-02 | 1.0669E-02 | 4.1877E-03 | 3.2620E-04 |
| A16 | -1.2673E+00 | 6.3270E-03 | 9.5167E-03 | -7.4828E-04 | -1.8826E-04 | -1.2109E-05 |
| A18 | 0.0000E+00 | 0.0000E+00 | 0.0000E+00 | 0.0000E+00 | 0.0000E+00 | 0.0000E+00 |
| A20 | 0.0000E+00 | 0.0000E+00 | 0.0000E+00 | 0.0000E+00 | 0.0000E+00 | 0.0000E+00 |

Table 14

| f(mm) | 3.43 | R5/R6 | 0.775 |
|---|---|---|---|

(continued)

| FNO | 1.8 | R9/f+R10/f | 1.996 |
|---|---|---|---|
| FOV (°) | 76.0 | MAX(cra) (°) | 38.5 |
| ImgH (mm) | 2.73 | f1/OAL | 1.033 |
| TTL (mm) | 4.14 | T34/P | 0.354 |
| f123/f456 | -0.91 | MIN(T56)/MAX(T56) | 0.106 |
| TTL/ImgH | 1.516 | \|f1/CT1\|+\|f2/CT2\|+\|f3/CT3\|+\|f4/CT4\|+\|f 5/CT5\|+\|f6/CT6\| | 342.394 |
| EPD/TTL | 0.463 | | |

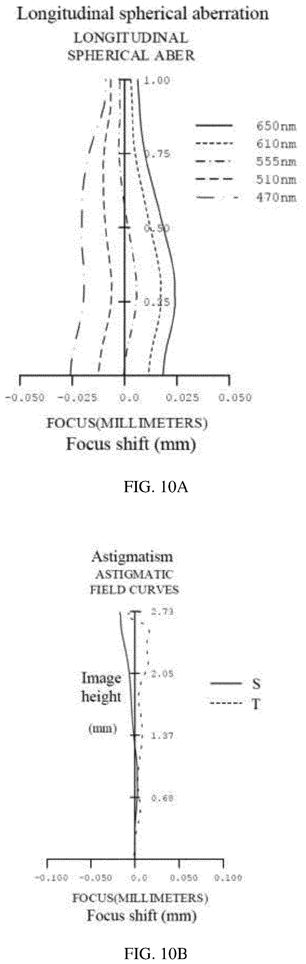

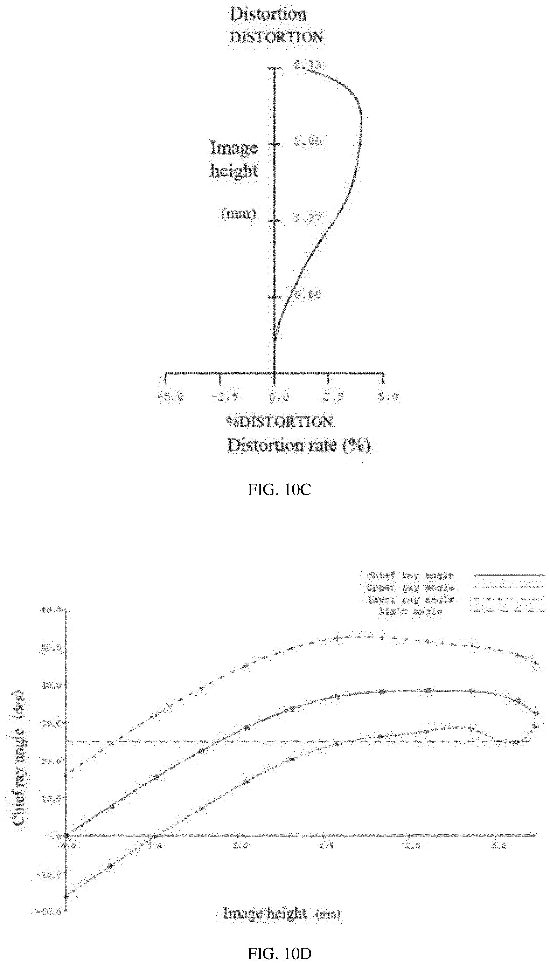

Figure 10A shows longitudinal spherical aberration curves of the optical lens assembly according to Embodiment 5, which respectively indicate focus shift of light with different wavelengths after convergence through the optical lens assembly. Figure 10B shows astigmatic field curves of the optical lens assembly according to Embodiment 5, which indicate curvature of a tangential image surface and curvature of a sagittal image surface. Figure 10C shows distortion curves of the optical lens assembly according to Embodiment 5, which indicate distortion rates at different image heights. Figure 10D shows chief ray angle curves on the imaging surface S15 of the optical lens assembly according to Embodiment 5, which indicates angles at which a chief ray is incident to a photosensitive element at different image heights. It may be known from Figure 10A to Figure 10D that the optical lens assembly according to Embodiment 5 can achieve good imaging quality.

Embodiment 6

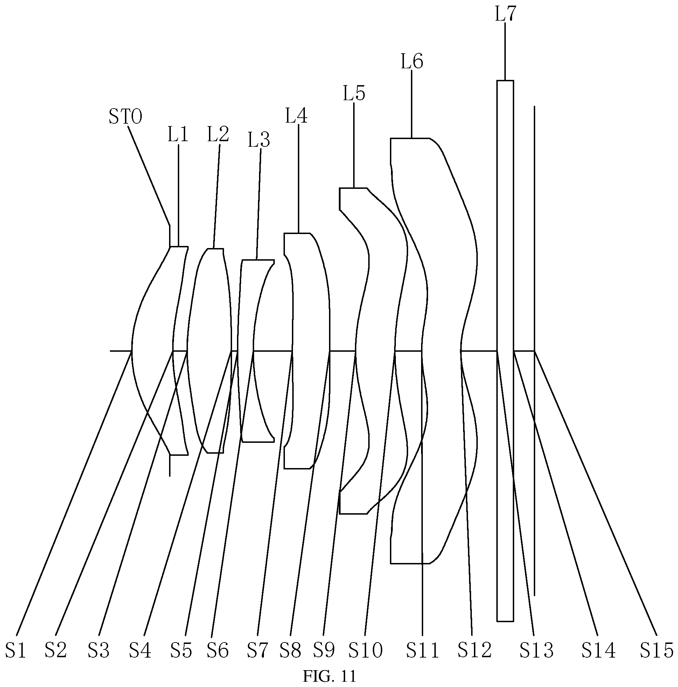

An optical lens assembly according to Embodiment 6 of the present application is described below with reference to Figure 11 to Figure 12D. In this embodiment, for brevity, the description similar to that of Embodiment 1 will be omitted. Figure 11 is a schematic structural diagram of an optical lens assembly according to Embodiment 6 of the present application.

As shown in Figure 11, the optical lens assembly includes a first lens L1, a second lens L2, a third lens L3, a fourth lens L4, a fifth lens L5, a sixth lens L6 and an imaging surface S15 in sequence from an object side to an image side along an optical axis.

The first lens L1 has positive focal power, with an object-side surface S1 being convex at the optical axis and convex at the circumference and an image-side surface S2 being concave at the optical axis and concave at the circumference.

The second lens L2 has positive focal power, with an object-side surface S3 being convex at the optical axis and convex at the circumference and an image-side surface S4 being convex at the optical axis and convex at the circumference.

The third lens L3 has negative focal power, with an object-side surface S5 being convex at the optical axis and convex at the circumference and an image-side surface S6 being concave at the optical axis and concave at the circumference.

The fourth lens L4 has positive focal power, with an object-side surface S7 being convex at the optical axis and concave at the circumference and an image-side surface S8 being concave at the optical axis and convex at the circumference.

The fifth lens L5 has positive focal power, with an object-side surface S9 being convex at the optical axis and concave at the circumference and an image-side surface S10 being concave at the optical axis and convex at the circumference.

The sixth lens L6 has negative focal power, with an object-side surface S11 being convex at the optical axis and concave at the circumference and an image-side surface S12 being concave at the optical axis and convex at the circumference.

The object-side surface and the image-side surface of each of the first lens L1 to the sixth lens L6 are both aspheric. The design of aspheric surfaces can solve the problem of distortion of the field of view, and enable the lens to achieve an excellent optical imaging effect in the case of being smaller, thinner and flatter, so as to make the optical lens assembly have miniaturization characteristics.

The first lens L1 to the sixth lens L6 are all made of plastic. The lens made of plastic can reduce the weight of the optical lens assembly and can further reduce manufacturing costs.

A diaphragm STO is further arranged between an object OBJ and the first lens L1, to further improve the imaging quality of the optical lens assembly.

The optical lens assembly further includes a filter L7 having an object-side surface S13 and an image-side surface S14. Light from the object OBJ sequentially passes through the surfaces S1 to S14 and is finally imaged on the imaging surface S15. Further, the filter L7 is an infrared filter, configured to filter out infrared light in external light incident into the optical lens assembly to avoid imaging distortion.

Table 15 shows surface types, curvature radii, thicknesses, materials, refractive indexes, Abbe numbers (i.e., dispersion coefficients) and effective focal lengths of the lenses of the optical lens assembly according to Embodiment 6, wherein the curvature radii, the thicknesses and the effective focal lengths of the lenses are all in millimeters (mm). Table 16 shows higher-order-term coefficients applicable to the aspheric surfaces S1 to S12 of the lenses in Embodiment 6, wherein the aspheric surface types may be defined by the formula (1) provided in Embodiment 1. Table 17 shows values of related parameters of the optical lens assembly according to Embodiment 6. A reference wavelength is 555 nm.

Table 15

| Embodiment 6 | | | | | | | | |
|---|---|---|---|---|---|---|---|---|
| f=4.061 mm, FNO=1.4, FOV=78°, TTL=5.132 mm | | | | | | | | |
| Surface number | Surface name | Surface type | Curvature radius | Thickness | Material | Refractive index | Abbe number | Focal length |
| OBJ | Object surface | Spherical | Infinity | 1000.00 | | | | |
| STO | Diaphragm | Spherical | Infinity | -0.485 | | | | |
| S1 | First lens | Aspheric | 1.858 | 0.523 | Plastic | 1.539 | 52.590 | 8.294 |
| S2 | | Aspheric | 2.858 | 0.183 | | | | |
| S3 | Second lens | Aspheric | 3.280 | 0.564 | Plastic | 1.535 | 55.790 | 5.208 |
| S4 | | Aspheric | -17.792 | 0.080 | | | | |
| S5 | Third lens | Aspheric | 10.716 | 0.200 | Plastic | 1.659 | 20.470 | -7.513 |
| S6 | | Aspheric | 3.381 | 0.499 | | | | |
| S7 | Fourth lens | Aspheric | 17.873 | 0.475 | Plastic | 1.636 | 23.870 | 74.433 |
| S8 | | Aspheric | 28.274 | 0.328 | | | | |
| S9 | Fifth lens | Aspheric | 2.766 | 0.500 | Plastic | 1.606 | 28.230 | 23.355 |
| S10 | | Aspheric | 3.198 | 0.341 | | | | |
| S11 | Sixth lens | Aspheric | 1.852 | 0.500 | Plastic | 1.609 | 27.570 | -13.394 |
| S12 | | Aspheric | 1.356 | 0.463 | | | | |
| S13 | Infrared filter | Spherical | Infinity | 0.210 | Glass | 1.517 | 64.167 | |
| S14 | | Spherical | Infinity | 0.332 | | | | |
| S15 | Imaging surface | Spherical | Infinity | -0.066 | | | | |

Table 16

| Embodiment 6 | | | | | | |
|---|---|---|---|---|---|---|
| Aspheric coefficient | | | | | | |
| Surface number | S1 | S2 | S3 | S4 | S5 | S6 |
| K | -7.9724E+00 | -1.2930E+01 | -6.2470E+00 | -9.6134E+01 | 5.1694E+01 | -9.7246E+00 |
| A4 | 1.3690E-01 | 2.6963E-02 | -2.5099E-02 | 7.8565E-03 | 2.0022E-02 | 5.2756E-02 |
| A6 | -1.1501E-01 | -8.0157E-02 | -1.4869E-02 | -1.0898E-01 | -1.5192E-01 | -1.4272E-01 |
| A8 | 7.3854E-02 | 5.5820E-02 | -4.4942E-02 | 1.8031E-01 | 2.8991E-01 | 3.9943E-01 |

(continued)

| Embodiment 6 | | | | | |
|---|---|---|---|---|---|
| Aspheric coefficient | | | | | |
| Surface number | S1 | S2 | S3 | S4 | S5 | S6 |
| A10 | -2.1838E-02 | -2.5318E-02 | 1.0728E-01 | -1.5606E-01 | -2.7994E-01 | -7.7739E-01 |
| A12 | -1.8542E-02 | 2.1391E-03 | -8.6284E-02 | 8.9389E-02 | 1.1379E-01 | 1.0785E+00 |
| A14 | 2.2788E-02 | 1.4068E-02 | 4.7156E-02 | -4.5146E-02 | 3.2525E-03 | -1.0355E+00 |
| A16 | -1.0936E-02 | -1.2790E-02 | -2.0719E-02 | 1.9101E-02 | -1.7003E-02 | 6.3772E-01 |
| A18 | 2.7304E-03 | 4.6897E-03 | 5.8556E-03 | -4.7972E-03 | 5.6061E-03 | -2.2161E-01 |
| A20 | -2.9208E-04 | -6.4601E-04 | -6.9079E-04 | 5.0762E-04 | -7.6467E-04 | 3.3156E-02 |
| Surface number | S7 | S8 | S9 | S10 | S11 | S12 |
| K | 9.9000E+01 | -9.9000E+01 | -9.3288E+00 | -4.9167E+01 | -1.5590E+00 | -3.0508E+00 |
| A4 | -2.9977E-02 | -4.4132E-02 | 2.5182E-02 | 3.3762E-02 | -3.1023E-01 | -1.8329E-01 |
| A6 | -1.0516E-02 | -6.5081E-02 | -4.6456E-02 | 5.5597E-03 | 1.4826E-01 | 9.8932E-02 |
| A8 | -3.7607E-02 | 1.3220E-01 | 4.3370E-02 | -3.2161E-02 | -4.8561E-02 | -3.7760E-02 |
| A10 | 1.9705E-01 | -1.3382E-01 | -5.1317E-02 | 1.9578E-02 | 1.2014E-02 | 9.2726E-03 |
| A12 | -3.5814E-01 | 8.7274E-02 | 3.7117E-02 | -6.3189E-03 | -2.2669E-03 | -1.3999E-03 |
| A14 | 3.4446E-01 | -3.7807E-02 | -1.5878E-02 | 1.2204E-03 | 3.3451E-04 | 1.2639E-04 |
| A16 | -1.9071E-01 | 1.0617E-02 | 3.9443E-03 | -1.4336E-04 | -3.7416E-05 | -6.5188E-06 |
| A18 | 5.7906E-02 | -1.7260E-03 | -5.1988E-04 | 9.8538E-06 | 2.7228E-06 | 1.8249E-07 |
| A20 | -7.5802E-03 | 1.1661E-04 | 2.7900E-05 | -3.1340E-07 | -9.1655E-08 | -2.7655E-09 |

Table 17

| f(mm) | 4.061 | R5/R6 | 3.169 |
|---|---|---|---|
| FNO | 1.4 | R9/f+R10/f | 1.469 |
| FOV (°) | 78.0 | MAX(cra) (°) | 35.2 |
| ImgH (mm) | 3.4 | f1/OAL | 1.978 |
| TTL (mm) | 5.132 | T34/P | 0.425 |
| f123/f456 | -0.013 | MIN(T56)/MAX(T56) | 0.150 |
| TTL/ImgH | 1.509 | \|f1/CT1\|+\|f2/CT2\|+\|f3/CT3\|+\|f4/CT4\|+\| f5/CT5\|+\|f6/CT6\| | 226.333 |
| EPD/TTL | 0.569 | | |

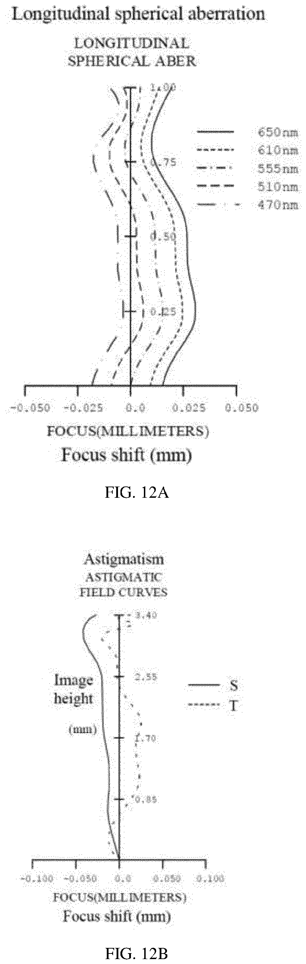

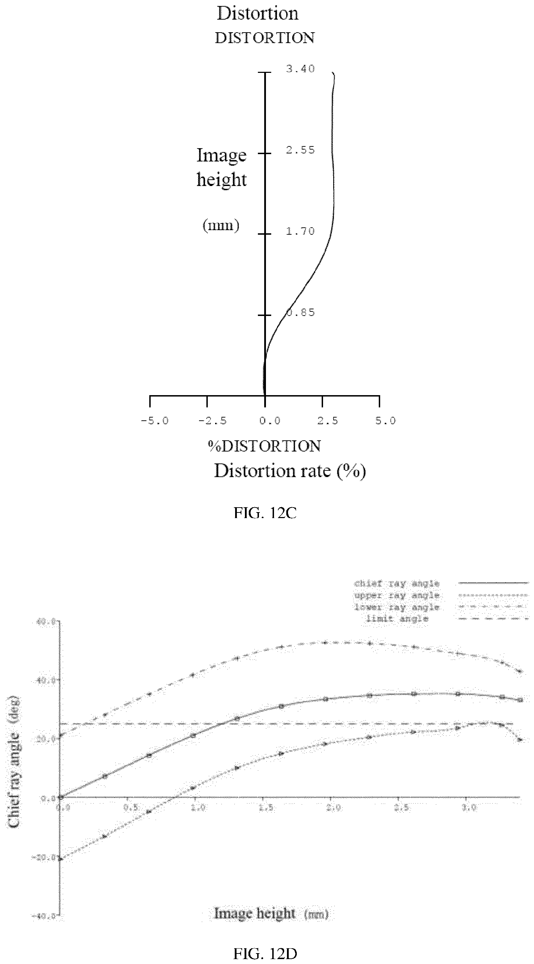

Figure 12A shows longitudinal spherical aberration curves of the optical lens assembly according to Embodiment 6, which respectively indicate focus shift of light with different wavelengths after convergence through the optical lens assembly. Figure 12B shows astigmatic field curves of the optical lens assembly according to Embodiment 6, which indicate curvature of a tangential image surface and curvature of a sagittal image surface. Figure 12C shows distortion curves of the optical lens assembly according to Embodiment 6, which indicate distortion rates at different image heights. Figure 12D shows chief ray angle curves on the imaging surface S15 of the optical lens assembly according to Embodiment 6, which indicates angles at which a chief ray is incident to a photosensitive element at different image heights. It may be known from Figure 12A to Figure 12D that the optical lens assembly according to Embodiment 6 can achieve good imaging quality.

Embodiment 7

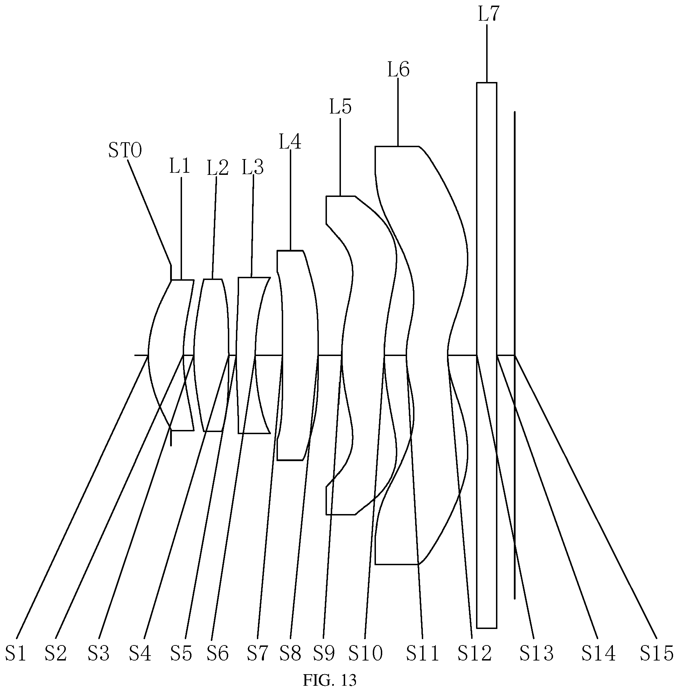

An optical lens assembly according to Embodiment 7 of the present application is described below with reference to Figure 13 to Figure 14D. In this embodiment, for brevity, the description similar to that of Embodiment 1 will be omitted. Figure 13 is a schematic structural diagram of an optical lens assembly according to Embodiment 7 of the present application.

As shown in Figure 13, the optical lens assembly includes a first lens L1, a second lens L2, a third lens L3, a fourth lens L4, a fifth lens L5, a sixth lens L6 and an imaging surface S15 in sequence from an object side to an image side along an optical axis.

The first lens L1 has positive focal power, with an object-side surface S1 being convex at the optical axis and convex at the circumference and an image-side surface S2 being concave at the optical axis and concave at the circumference.

The second lens L2 has positive focal power, with an object-side surface S3 being convex at the optical axis and convex at the circumference and an image-side surface S4 being convex at the optical axis and convex at the circumference.

The third lens L3 has negative focal power, with an object-side surface S5 being convex at the optical axis and concave at the circumference and an image-side surface S6 being concave at the optical axis and concave at the circumference.

The fourth lens L4 has positive focal power, with an object-side surface S7 being convex at the optical axis and concave at the circumference and an image-side surface S8 being convex at the optical axis and convex at the circumference.

The fifth lens L5 has positive focal power, with an object-side surface S9 being convex at the optical axis and concave at the circumference and an image-side surface S10 being concave at the optical axis and convex at the circumference.

The sixth lens L6 has negative focal power, with an object-side surface S11 being convex at the optical axis and concave at the circumference and an image-side surface S12 being concave at the optical axis and convex at the circumference.

The object-side surface and the image-side surface of each of the first lens L1 to the sixth lens L6 are both aspheric. The design of aspheric surfaces can solve the problem of distortion of the field of view, and enable the lens to achieve an excellent optical imaging effect in the case of being smaller, thinner and flatter, so as to make the optical lens assembly have miniaturization characteristics.

The first lens L1 to the sixth lens L6 are all made of plastic. The lens made of plastic can reduce the weight of the optical lens assembly and can further reduce manufacturing costs.

A diaphragm STO is further arranged between an object OBJ and the first lens L1, to further improve the imaging quality of the optical lens assembly.

The optical lens assembly further includes a filter L7 having an object-side surface S13 and an image-side surface S14. Light from the object OBJ sequentially passes through the surfaces S1 to S14 and is finally imaged on the imaging surface S15. Further, the filter L7 is an infrared filter, configured to filter out infrared light in external light incident into the optical lens assembly to avoid imaging distortion.

Table 18 shows surface types, curvature radii, thicknesses, materials, refractive indexes, Abbe numbers (i.e., dispersion coefficients) and effective focal lengths of the lenses of the optical lens assembly according to Embodiment 7, wherein the curvature radii, the thicknesses and the effective focal lengths of the lenses are all in millimeters (mm). Table 19 shows higher-order-term coefficients applicable to the aspheric surfaces S1 to S12 of the lenses in Embodiment 7, wherein the aspheric surface types may be defined by the formula (1) provided in Embodiment 1. Table 20 shows values of related parameters of the optical lens assembly according to Embodiment 7. A reference wavelength is 555 nm.

Table 18

| Embodiment 7 | | | | | | | | |
|---|---|---|---|---|---|---|---|---|
| f=2.95 mm, FNO=1.7, FOV=85.7°, TTL=3.857 mm | | | | | | | | |
| Surface number | Surface name | Surface type | Curvature radius | Thickness | Material | Refractive index | Abbe number | Focal length |
| OBJ | Object surface | Spherical | Infinity | 1000.00 | | | | |
| STO | Diaphragm | Spherical | Infinity | -0.238 | | | | |

(continued)

| Surface number | Surface name | Surface type | Curvature radius | Thickness | Material | Refractive index | Abbe number | Focal length |
|---|---|---|---|---|---|---|---|---|
| | | | | Embodiment 7 | | | | |
| | | | f=2.95 mm, FNO=1.7, FOV=85.7°, TTL=3.857 mm | | | | | |
| S1 | First lens | Aspheric | 1.450 | 0.368 | Plastic | 1.536 | 54.700 | 6.581 |
| S2 | | Aspheric | 2.239 | 0.110 | | | | |
| S3 | Second lens | Aspheric | 2.717 | 0.368 | Plastic | 1.535 | 55.790 | 4.324 |
| S4 | | Aspheric | -15.155 | 0.080 | | | | |
| S5 | Third lens | Aspheric | 8.649 | 0.200 | Plastic | 1.654 | 20.820 | -7.820 |
| S6 | | Aspheric | 3.203 | 0.287 | | | | |
| S7 | Fourth lens | Aspheric | 77.152 | 0.375 | Plastic | 1.586 | 32.150 | 103.620 |
| S8 | | Aspheric | -293.222 | 0.247 | | | | |
| S9 | Fifth lens | Aspheric | 2.215 | 0.447 | Plastic | 1.649 | 21.730 | 57.689 |
| S10 | | Aspheric | 2.165 | 0.233 | | | | |
| S11 | Sixth lens | Aspheric | 1.167 | 0.435 | Plastic | 1.601 | 28.710 | -17.681 |
| S12 | | Aspheric | 0.904 | 0.308 | | | | |
| S13 | Infrared filter | Spherical | Infinity | 0.210 | Glass | 1.517 | 64.167 | |
| S14 | | Spherical | Infinity | 0.245 | | | | |
| S15 | Imaging surface | Spherical | Infinity | -0.055 | | | | |

Table 19

| Surface number | S1 | S2 | S3 | S4 | S5 | S6 |
|---|---|---|---|---|---|---|
| | | | Embodiment 7 | | | |
| | | | Aspheric coefficient | | | |
| K | -8.3857E+00 | -1.1593E+01 | -3.9447E+00 | 9.8963E+01 | 5.6326E+01 | -7.8018E+00 |
| A4 | 3.0915E-01 | 2.8607E-02 | -6.5349E-02 | 7.3342E-02 | 3.9306E-02 | 7.0288E-02 |
| A6 | -7.0708E-01 | 1.8447E-01 | 3.0178E-01 | -1.5744E+00 | -5.0809E-01 | -5.1205E-02 |
| A8 | 2.8711E+00 | -3.7754E+00 | -3.4537E+00 | 1.1350E+01 | 1.6541E+00 | -2.1893E-01 |
| A10 | -1.2576E+01 | 2.2957E+01 | 1.9518E+01 | -5.2314E+01 | -3.4611E+00 | 1.6317E+00 |
| A12 | 3.8313E+01 | -8.1094E+01 | -6.7096E+01 | 1.5068E+02 | 2.6401E+00 | -5.6896E+00 |
| A14 | -7.4066E+01 | 1.7348E+02 | 1.4287E+02 | -2.7082E+02 | 4.7518E+00 | 1.2377E+01 |
| A16 | 8.6184E+01 | -2.2077E+02 | -1.8253E+02 | 2.9523E+02 | -1.2809E+01 | -1.6017E+01 |
| A18 | -5.5027E+01 | 1.5424E+02 | 1.2874E+02 | -1.7823E+02 | 1.1200E+01 | 1.1275E+01 |
| A20 | 1.4812E+01 | -4.5637E+01 | -3.8691E+01 | 4.5520E+01 | -3.6078E+00 | -3.2867E+00 |
| Surface number | S7 | S8 | S9 | S10 | S11 | S12 |
| K | 9.9000E+01 | 7.4250E+01 | -1.3553E+01 | -2.6727E+01 | -1.7259E+00 | -3.3024E+00 |
| A4 | -5.5339E-02 | -1.4826E-01 | 1.4120E-02 | -6.0838E-02 | -7.2722E-01 | -3.3470E-01 |
| A6 | -3.9674E-03 | 1.9710E-02 | 3.8842E-02 | 3.0641E-01 | 6.1352E-01 | 2.8288E-01 |

(continued)

| Surface number | S7 | S8 | S9 | S10 | S11 | S12 |
|---|---|---|---|---|---|---|
| A8 | 3.0535E-02 | 8.7933E-02 | -3.1381E-01 | -5.6331E-01 | -3.3036E-01 | -1.6416E-01 |
| A10 | -6.3925E-02 | -1.3520E-01 | 4.6770E-01 | 5.2321E-01 | 1.1743E-01 | 6.1323E-02 |
| A12 | 5.4825E-02 | 1.5637E-01 | -4.2827E-01 | -2.9792E-01 | -2.7491E-02 | -1.4661E-02 |
| A14 | -6.2906E-03 | -1.5021E-01 | 2.5339E-01 | 1.0697E-01 | 4.5073E-03 | 2.2785E-03 |
| A16 | -1.1746E-01 | 1.3028E-01 | -9.1822E-02 | -2.3499E-02 | -5.8988E-04 | -2.3365E-04 |
| A18 | 1.8322E-01 | -7.0952E-02 | 1.8471E-02 | 2.8663E-03 | 6.1502E-05 | 1.5404E-05 |
| A20 | -9.7335E-02 | 1.4884E-02 | -1.5814E-03 | -1.4735E-04 | -3.4044E-06 | -5.1868E-07 |

Table 20

| f(mm) | 2.95 | R5/R6 | 2.70 |
|---|---|---|---|
| FNO | 1.7 | R9/f+R10/f | 1.485 |
| FOV (°) | 85.7 | MAX(cra) (°) | 36.9 |
| ImgH (mm) | 2.8 | f1/OAL | 2.090 |
| TTL (mm) | 3.857 | T34/P | 0.333 |
| f123/f456 | -0.07 | MIN(T56)/MAX(T56) | 0.118 |
| TTL/ImgH | 1.378 | |f1/CT1|+|f2/CT2|+|f3/CT3|+|f4/CT4|+|f 5/CT5|+|f6/CT6| | 514.757 |
| EPD/TTL | 0.452 | | |

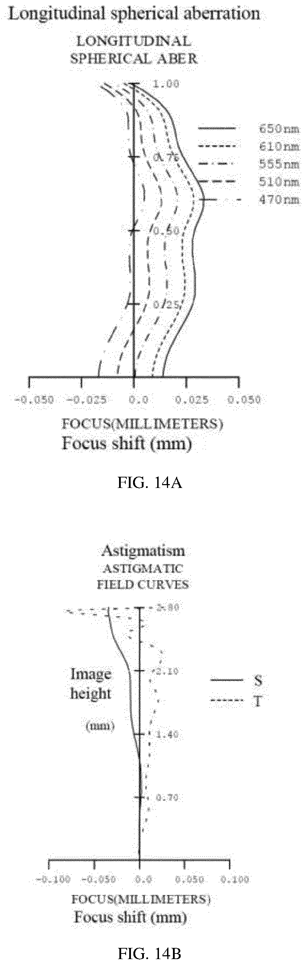

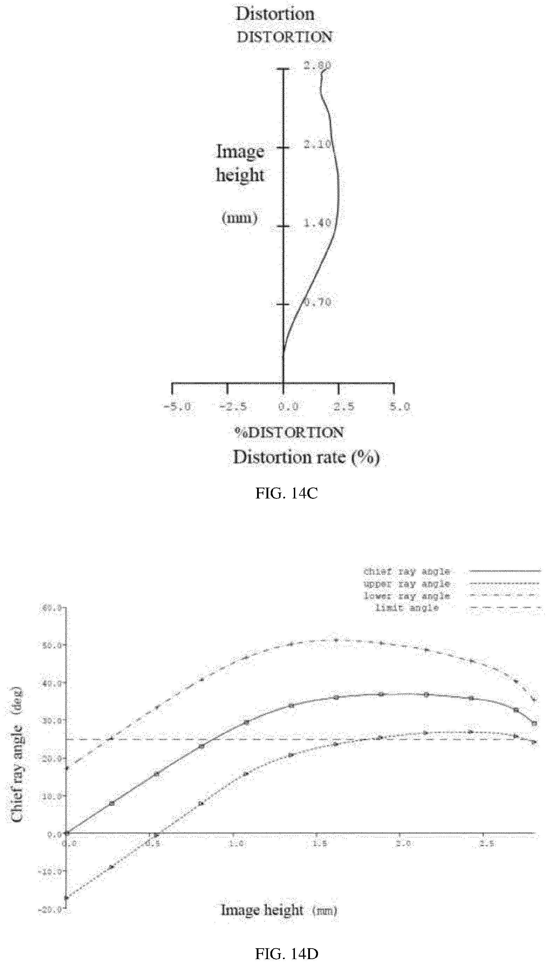

Figure 14A shows longitudinal spherical aberration curves of the optical lens assembly according to Embodiment 7, which respectively indicate focus shift of light with different wavelengths after convergence through the optical lens assembly. Figure 14B shows astigmatic field curves of the optical lens assembly according to Embodiment 7, which indicate curvature of a tangential image surface and curvature of a sagittal image surface. Figure 14C shows distortion curves of the optical lens assembly according to Embodiment 7, which indicate distortion rates at different image heights. Figure 14D shows chief ray angle curves on the imaging surface S15 of the optical lens assembly according to Embodiment 7, which indicates angles at which a chief ray is incident to a photosensitive element at different image heights. It may be known from Figure 14A to Figure 14D that the optical lens assembly according to Embodiment 7 can achieve good imaging quality.

The present application further provides an image capturing apparatus, including the optical lens assembly as described above; and a photosensitive element arranged on the image side of the optical lens assembly to receive light carrying image information formed by the optical lens assembly. Specifically, the photosensitive element may be a complementary metal oxide semiconductor (CMOS) image sensor or a charge-coupled device (CCD) image sensor. The image capturing apparatus can obtain clear and bright images by using the optical lens assembly even under dark light conditions. At the same time, the image capturing apparatus is also miniaturized for easy adaptation to apparatuses with a limited size, such as slim electronic devices.

The present application further provides an electronic apparatus, including a housing and the image capturing apparatus described above. The image capturing apparatus is mounted to the housing to acquire an image.

Specifically, the image capturing apparatus is arranged in the housing and is exposed from the housing to acquire an image. The housing can provide dustproof, waterproof and shatter-resistant protection for the image capturing apparatus. The housing is provided with a hole corresponding to the image capturing apparatus, to allow light to penetrate into or out of the housing through the hole.

The electronic apparatus features a slim structure. Bright Images with a good blurring effect and high definition can be obtained by using the image capturing apparatus described above, so as to meet users' needs of multi-scene and professional photographing.

The "electronic apparatus" used in the embodiments of the present application includes, but is not limited to, an apparatus that is configured to receive/transmit communication signals via a wireline connection and/or via a wireless interface. An electronic apparatus that is configured to communicate over a wireless interface may be referred to as a "wireless communication terminal," a "wireless terminal" and/or a "mobile terminal." Examples of mobile terminals include, but are not limited to, a satellite or cellular phone; a personal communications system (PCS) terminal that may combine a cellular radiotelephone with data processing, facsimile and data communications capabilities; a personal digital assistant (PDA) that can include a radiotelephone, a pager, an Internet/intranet access, a Web browser, an organizer, a calendar and/or a global positioning system (GPS) receiver; and a conventional laptop and/or palmtop receiver or other electronic apparatuses that include a radiotelephone transceiver.

Technical features of the above embodiments may be combined randomly. To make descriptions brief, not all possible combinations of the technical features in the embodiments are described. Therefore, as long as there is no contradiction between the combinations of the technical features, they should all be considered as scopes disclosed in the specification.

The above embodiments only describe several implementations of the present application, which are described specifically and in detail, and therefore cannot be construed as a limitation on the patent scope. It should be pointed out that those of ordinary skill in the art may also make several changes and improvements without departing from the ideas of the present application, all of which fall within the protection scope of the present application. Therefore, the patent protection scope of the present application shall be subject to the appended claims.

**Claims**

1. An optical lens assembly, comprising a first lens, a second lens, a third lens, a fourth lens, a fifth lens and a sixth lens in sequence from an object side to an image side along an optical axis, wherein

   the first lens has positive focal power, with an object-side surface being convex at the optical axis;
   the second lens has focal power;
   the third lens has focal power, with an object-side surface being convex at the optical axis and an image-side surface being concave at the optical axis;
   the fourth lens has focal power;
   the fifth lens has focal power, with an object-side surface being convex at the optical axis and an image-side surface being concave at the optical axis;
   the sixth lens has negative focal power, with an object-side surface being convex at the optical axis and an image-side surface being concave at the optical axis, at least one of the object-side surface and the image-side surface of the sixth lens comprising at least one inflection point; and
   the optical lens assembly satisfies the following relations:

$$FNO \leq 1.8;$$

   and

$$-1 < f123/f456 < 0;$$

   where FNO is an f-number of the optical lens assembly, f123 is a combined focal length of the first lens, the second lens and the third lens, and f456 is a combined focal length of the fourth lens, the fifth lens and the sixth lens.

2. The optical lens assembly according to claim 1, wherein the object-side surface and the image-side surface of the sixth lens are both aspheric.

3. The optical lens assembly according to claim 1, wherein the optical lens assembly satisfies the following relation:

$$TTL/ImgH \leq 1.7;$$

   where TTL is a distance on the optical axis from the object-side surface of the first lens to an imaging surface of the optical lens assembly, and ImgH is half of a diagonal length of an effective pixel region on the imaging surface of the optical lens assembly.

4. The optical lens assembly according to claim 1, wherein the optical lens assembly satisfies the following relation:

$$EPD/TTL > 0.45;$$

where EPD is an entrance pupil diameter of the optical lens assembly, and TTL is a distance on the optical axis from the object-side surface of the first lens to an imaging surface of the optical lens assembly.

5. The optical lens assembly according to claim 1, wherein the optical lens assembly satisfies the following relation:

$$0.3 < R5/R6 < 3.5;$$

where R5 is a curvature radius of the object-side surface of the third lens at the optical axis, and R6 is a curvature radius of the image-side surface of the third lens at the optical axis.

6. The optical lens assembly according to claim 1, wherein the optical lens assembly satisfies the following relation:

$$1 < R9/f + R10/f < 2;$$

where R9 is a curvature radius of the object-side surface of the fifth lens at the optical axis, R10 is a curvature radius of the image-side surface of the fifth lens at the optical axis, and f is an effective focal length of the optical lens assembly.

7. The optical lens assembly according to claim 1, wherein the optical lens assembly satisfies the following relation:

$$MAX(cra) \leq 38.5°;$$

where MAX(cra) is a maximum chief ray angle on an imaging surface of the optical lens assembly.

8. The optical lens assembly according to claim 1, wherein the optical lens assembly satisfies the following relation:

$$f1/OAL > 0.7;$$

where f1 is an effective focal length of the first lens, and OAL is a distance on the optical axis from the object-side surface of the first lens to the image-side surface of the sixth lens.

9. The optical lens assembly according to claim 1, wherein the optical lens assembly satisfies the following relation:

$$0.3 < T34/P < 0.5;$$

where T34 is a distance from the image-side surface of the third lens to an object-side surface of the fourth lens, and P is a distance on the optical axis from the object-side surface of the third lens to an image-side surface of the fourth lens.

10. The optical lens assembly according to claim 1, wherein the optical lens assembly satisfies the following relation:

$$MIN(T56)/MAX(T56) < 0.54;$$

where MIN(T56) is a minimum distance from the image-side surface of the fifth lens to the object-side surface of the sixth lens in a direction parallel to the optical axis, and MAX(T56) is a maximum distance from the image-side surface of the fifth lens to the object-side surface of the sixth lens in the direction parallel to the optical axis.

**11.** The optical lens assembly according to claim 1, wherein the optical lens assembly satisfies the following relation:

$$|f1/CT1|+|f2/CT2|+|f3/CT3|+|f4/CT4|+|f5/CT5|+|f6/CT6|>141;$$

where f1 is an effective focal length of the first lens, f2 is an effective focal length of the second lens, f3 is an effective focal length of the third lens, f4 is an effective focal length of the fourth lens, f5 is an effective focal length of the fifth lens, f6 is an effective focal length of the sixth lens, CT1 is a thickness of the first lens on the optical axis, CT2 is a thickness of the second lens on the optical axis, CT3 is a thickness of the third lens on the optical axis, CT4 is a thickness of the fourth lens on the optical axis, CT5 is a thickness of the fifth lens on the optical axis, and CT6 is a thickness of the sixth lens on the optical axis.

**12.** An image capturing apparatus, comprising the optical lens assembly according to any one of claims 1 to 11; and a photosensitive element, the photosensitive element being arranged on the image side of the optical lens assembly.

**13.** An electronic apparatus, comprising: a housing; and the image capturing apparatus according to claim 12, the image capturing apparatus being mounted to the housing.

FIG. 1

## Longitudinal spherical aberration

FIG. 2A

FIG. 2B

Distortion
DISTORTION

Image
height

(mm)

%DISTORTION
Distortion rate (%)

FIG. 2C

chief ray angle
upper ray angle
lower ray angle
limit angle

Chief ray angle (deg)

Image height (mm)

FIG. 2D

FIG. 3

Longitudinal spherical aberration

LONGITUDINAL
SPHERICAL ABER

650nm
610nm
555nm
510nm
470nm

FOCUS(MILLIMETERS)
Focus shift (mm)

FIG. 4A

Astigmatism

ASTIGMATIC
FIELD CURVES

Image
height

(mm)

S
T

FOCUS(MILLIMETERS)
Focus shift (mm)

图 4B

Distortion
DISTORTION

FIG. 4C

FIG. 4D

FIG. 5

Longitudinal spherical aberration

FIG. 6A

FIG. 6B

Distortion
DISTORTION

Image
height

(mm)

2.73

2.05

1.37

0.68

-5.0    -2.5    0.0    2.5    5.0
%DISTORTION
Distortion rate (%)

FIG. 6C

chief ray angle
upper ray angle
lower ray angle
limit angle

Chief ray angle (deg)

50.0

40.0

30.0

20.0

10.0

0.0

-10.0

-20.0

0.0    0.5    1.0    1.5    2.0    2.5

Image height (mm)

FIG. 6D

FIG. 7

Longitudinal spherical aberration

FIG. 8A

FIG. 8B

Distortion
DISTORTION

Image
height

(mm)

%DISTORTION
Distortion rate (%)

FIG. 8C

chief ray angle
upper ray angle
lower ray angle
limit angle

Chief ray angle (deg)

Image height (mm)

FIG. 8D

FIG. 9

## Longitudinal spherical aberration

LONGITUDINAL
SPHERICAL ABER

FOCUS(MILLIMETERS)
Focus shift (mm)

FIG. 10A

## Astigmatism

ASTIGMATIC
FIELD CURVES

Image
height

(mm)

FOCUS(MILLIMETERS)
Focus shift (mm)

FIG. 10B

Distortion
DISTORTION

Image
height

(mm)

2.73

2.05

1.37

0.68

-5.0    -2.5    0.0    2.5    5.0

%DISTORTION
Distortion rate (%)

FIG. 10C

chief ray angle
upper ray angle
lower ray angle
limit angle

Chief ray angle (deg)

40.0

50.0

40.0

30.0

20.0

10.0

0.0

-10.0

-20.0

0.0    0.5    1.0    1.5    2.0    2.5

Image height (mm)

FIG. 10D

FIG. 11

Longitudinal spherical aberration

FIG. 12A

FIG. 12B

Distortion
DISTORTION

Image
height

(mm)

3.40

2.55

1.70

0.85

-5.0    -2.5    0.0    2.5    5.0

%DISTORTION
Distortion rate (%)

FIG. 12C

chief ray angle
upper ray angle
lower ray angle
limit angle

Chief ray angle (deg)

60.0

40.0

20.0

0.0

-20.0

-40.0

0.0    0.5    1.0    1.5    2.0    2.5    3.0

Image height (mm)

FIG. 12D

FIG. 13

Longitudinal spherical aberration

LONGITUDINAL
SPHERICAL ABER

1.00

650nm
610nm
555nm
510nm
470nm

0.75

0.50

0.25

-0.050  -0.025   0.0   0.025   0.050

FOCUS(MILLIMETERS)
Focus shift (mm)

FIG. 14A

Astigmatism
ASTIGMATIC
FIELD CURVES

2.80

Image
height

2.10

S
T

(mm)

1.40

0.70

-0.100  -0.050   0.0   0.050   0.100

FOCUS(MILLIMETERS)
Focus shift (mm)

FIG. 14B

Distortion
DISTORTION

Image
height

(mm)

2.80

2.10

1.40

0.70

-5.0    -2.5    0.0    2.5    5.0

%DISTORTION
Distortion rate (%)

FIG. 14C

chief ray angle
upper ray angle
lower ray angle
limit angle

60.0

50.0

40.0

30.0

20.0

10.0

0.0

-10.0

-20.0

0.0    0.5    1.0    1.5    2.0    2.5

Chief ray angle (deg)

Image height (mm)

FIG. 14D

## INTERNATIONAL SEARCH REPORT

| International application No. |
| --- |
| **PCT/CN2019/115318** |

**A. CLASSIFICATION OF SUBJECT MATTER**

G02B 13/00(2006.01)i; G02B 9/62(2006.01)i; G02B 11/32(2006.01)i

According to International Patent Classification (IPC) or to both national classification and IPC

**B. FIELDS SEARCHED**

Minimum documentation searched (classification system followed by classification symbols)

G02B 13, G02B 9/62, G02B 11/32; CPC: G02B 13/0045; FT: 2H087/PA06, 2H087/QA11, 2H087/QA36

Documentation searched other than minimum documentation to the extent that such documents are included in the fields searched

Electronic data base consulted during the international search (name of data base and, where practicable, search terms used)

CNABS; CNTXT; DWPI; SIPOABS; EPTXT; USTXT; WOTXT: 欧菲, 谢晗, 刘彬彬, 李明, 第一, 第1, 第六, 第6, 正, 负, 组合, 合成, 复合, 整体, 焦距, f123, f456, first, 1st, sixth, 6th, positive, negative

**C. DOCUMENTS CONSIDERED TO BE RELEVANT**

| Category* | Citation of document, with indication, where appropriate, of the relevant passages | Relevant to claim No. |
| --- | --- | --- |
| A | CN 207164341 U (SAMSUNG ELECTRO-MECHANICS CO., LTD.) 30 March 2018 (2018-03-30) description paragraphs [0003]-[0114] and figures 1,4,7 | 1-13 |
| A | CN 207424363 U (SAMSUNG ELECTRO-MECHANICS CO., LTD.) 29 May 2018 (2018-05-29) entire document | 1-13 |
| A | CN 206946078 U (SAMSUNG ELECTRO-MECHANICS CO., LTD.) 30 January 2018 (2018-01-30) entire document | 1-13 |
| A | WO 2014162779 A1 (SONY CORP.) 09 October 2014 (2014-10-09) entire document | 1-13 |
| A | TW I625567 B (LARGAN PRECISION CO., LTD.) 01 June 2018 (2018-06-01) entire document | 1-13 |
| A | WO 2017180362 A1 (APPLE INC.) 19 October 2017 (2017-10-19) entire document | 1-13 |
| A | US 2018113282 A1 (NEWMAX TECHNOLOGY CO., LTD.) 26 April 2018 (2018-04-26) entire document | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 June 2020** | **01 July 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2019/115318**

**C.     DOCUMENTS CONSIDERED TO BE RELEVANT**

| Category* | Citation of document, with indication, where appropriate, of the relevant passages | Relevant to claim No. |
|---|---|---|
| A | CN 106610518 A (LARGAN PRECISION CO., LTD.) 03 May 2017 (2017-05-03) entire document | 1-13 |

Form PCT/ISA/210 (second sheet) (January 2015)

<div align="center">

**INTERNATIONAL SEARCH REPORT**
**Information on patent family members**

</div>

| International application No. |
| --- |
| **PCT/CN2019/115318** |

| Patent document cited in search report | | | Publication date (day/month/year) | Patent family member(s) | | | Publication date (day/month/year) |
| --- | --- | --- | --- | --- | --- | --- | --- |
| CN | 207164341 | U | 30 March 2018 | US | 2018100993 | A1 | 12 April 2018 |
| | | | | CN | 107942475 | A | 20 April 2018 |
| | | | | KR | 20180040262 | A | 20 April 2018 |
| CN | 207424363 | U | 29 May 2018 | US | 2018180854 | A1 | 28 June 2018 |
| | | | | KR | 20180075152 | A | 04 July 2018 |
| | | | | CN | 108241200 | A | 03 July 2018 |
| | | | | KR | 20190140888 | A | 20 December 2019 |
| | | | | US | 20200150395 | A1 | 14 May 2020 |
| CN | 206946078 | U | 30 January 2018 | US | 10302904 | B2 | 28 May 2019 |
| | | | | US | 2019235208 | A1 | 01 August 2019 |
| | | | | KR | 20180071862 | A | 28 June 2018 |
| | | | | CN | 108205187 | A | 26 June 2018 |
| | | | | KR | 101956704 | B1 | 11 March 2019 |
| | | | | US | 2018172956 | A1 | 21 June 2018 |
| | | | | KR | 20190025592 | A | 11 March 2019 |
| WO | 2014162779 | A1 | 09 October 2014 | TW | I641863 | B | 21 November 2018 |
| | | | | US | 2016054543 | A1 | 25 February 2016 |
| | | | | JP | 6233408 | B2 | 22 November 2017 |
| | | | | TW | 201447354 | A | 16 December 2014 |
| | | | | US | 9804358 | B2 | 31 October 2017 |
| | | | | JP | WO2014162779 | A1 | 16 February 2017 |
| TW | I625567 | B | 01 June 2018 | US | 10330894 | B2 | 25 June 2019 |
| | | | | US | 2019113714 | A1 | 18 April 2019 |
| | | | | TW | 201917435 | A | 01 May 2019 |
| | | | | CN | 109669258 | A | 23 April 2019 |
| | | | | IN | 201814000571 | A | 19 April 2019 |
| WO | 2017180362 | A1 | 19 October 2017 | CN | 109073861 | A | 21 December 2018 |
| | | | | EP | 3443397 | A1 | 20 February 2019 |
| | | | | US | 10310222 | B2 | 04 June 2019 |
| | | | | US | 2017299845 | A1 | 19 October 2017 |
| US | 2018113282 | A1 | 26 April 2018 | US | 10302909 | B2 | 28 May 2019 |
| CN | 106610518 | A | 03 May 2017 | CN | 106610518 | B | 15 February 2019 |

Form PCT/ISA/210 (patent family annex) (January 2015)